# EUROPEAN PATENT APPLICATION

(11) **EP 4 492 856 A1**
(43) Date of publication of application: **15.01.2025**
(21) Application number: 23778413.7
(22) Date of filing: 30.03.2023
(51) Int. Cl.: H04W 24/08

(54) **AI SERVICE INFORMATION ACQUISITION METHOD, APPARATUS AND SYSTEM**

(30) Priority: 01.04.2022 CN 202210349458
(71) Applicant: Huawei Technologies Co., Ltd., Shenzhen, Guangdong 518129 (CN)
(72) Inventor: QIAO, Yunfei, Shenzhen, Guangdong 518129 (CN); WANG, Jian, Shenzhen, Guangdong 518129 (CN); ZHANG, Gongzheng, Shenzhen, Guangdong 518129 (CN)
(74) Representative: Gill Jennings & Every LLP
(86) International application number: PCT/CN2023/085246
(87) International publication number: WO 2023/186048

(57) **Abstract**

This application relates to the field of communication technologies, and provides an AI service information obtaining method, an apparatus, and a system, so that a terminal device and an AI node in a network can exchange AI service information. In the method, a first AI node sends measurement configuration information to the terminal device, where the measurement configuration information indicates to measure an AI service of a to-be-measured AI node; and the first AI node receives a measurement report from the terminal device, where the measurement report includes candidate AI service information, the candidate AI service information is AI service information that meets a first condition and that is in one or more pieces of AI service information obtained by measuring the to-be-measured AI node based on the measurement configuration information, and the first condition is carried in the measurement configuration information.

## Description

This application claims priority to Chinese Patent Application No. 202210349458.2, filed with the China National Intellectual Property Administration on April 1, 2022 and entitled "AI SERVICE INFORMATION OBTAINING METHOD, APPARATUS, AND SYSTEM", which is incorporated herein by reference in its entirety.

### TECHNICAL FIELD

This application relates to the field of communication technologies, and in particular, to an AI service information obtaining method, an apparatus, and a system.

### BACKGROUND

The intelligentization of a wireless network is an important evolution trend. Currently, an artificial intelligence (artificial intelligence, AI) capability is introduced to a 5th generation mobile communication (5th generation mobile communication, 5G) network. An AI node is deployed in the network having the AI capability, and the AI node may provide an AI service for a terminal device, to bring better service experience to a user.

When there are a plurality of selectable AI nodes in the network, to meet requirements of different services, the terminal device needs to dynamically select an appropriate AI node, so that the selected AI node can provide, for the terminal device, an AI service that meets a requirement. Currently, the appropriate AI node may be selected based on related information about an AI service provided by each AI node, that is, AI service information. Therefore, to enable the terminal device in the network to dynamically select the AI node to optimize overall network performance, a feasible solution is to enable the terminal device and the AI node in the network to exchange AI service information, to facilitate collaborative management between AI nodes. However, there is no solution of how to enable the terminal device and the AI node in the network to exchange the AI service information.

### SUMMARY

Embodiments of this application provide an AI service information obtaining method, an apparatus, and a system, to resolve a problem of how to exchange AI service information between a terminal device and an AI node in a network.

To achieve the foregoing objectives, the following technical solutions are used in embodiments of this application.

According to a first aspect, an AI service information obtaining method is provided. A communication apparatus (body) that performs the method may be a network device corresponding to a first AI node, or may be a component of the network device corresponding to the first Al node, for example, a processor, a chip, or a chip system. The following uses an example in which the execution body is the first AI node for description. The method includes: The first AI node sends measurement configuration information to a terminal device, where the measurement configuration information indicates to measure an AI service of a to-be-measured AI node; and the first AI node receives a measurement report from the terminal device, where the measurement report includes candidate AI service information, the candidate AI service information is AI service information that meets a first condition and that is in one or more pieces of AI service information obtained by measuring the to-be-measured AI node based on the measurement configuration information, and the first condition is carried in the measurement configuration information. Based on the technical solutions in embodiments of this application, an AI node may obtain, by interacting with the terminal device, AI service information that is of another AI node and that meets a specific condition, to facilitate collaborative management between different AI nodes in an AI network.

With reference to the first aspect, in a possible design, the candidate AI service information includes AI service identification information and performance information, where the AI service identification information identifies an AI service corresponding to the candidate AI service information, the performance information represents performance of the AI service corresponding to the candidate AI service information, and the method further includes: The first AI node separately adds, to a local AI service list based on the AI service identification information and the performance information, target AI service information in candidate AI service information corresponding to each of the one or more AI services corresponding to the candidate AI service information, where the target AI service information is candidate AI service information with optimal AI service performance in the candidate AI service information corresponding to each of the one or more AI services. Based on this solution, the corresponding candidate AI service information with optimal performance may be selected from the one or more pieces of candidate AI service information corresponding to the AI service, and added to the local AI service list.

With reference to the first aspect, in a possible design, the method further includes: The first AI node adds target AI service information in the candidate AI service information to a local AI service list, where the target AI service information is candidate AI service information that is in the candidate AI service information and that is different from AI service information recorded in the local AI service list. Based on this solution, the candidate AI service information different from the locally recorded AI service information may be added to the local AI service list, to ensure that same candidate AI service information does not appear in the local AI service list.

With reference to the first aspect, in a possible design, the candidate AI service information includes AI node identification information, the AI node identification information identifies the to-be-measured AI node corresponding to the candidate AI service information, and the method further includes: The first AI node determines, based on AI node identification information included in one or more pieces of AI service information in the local AI service list, an AI node or AI nodes corresponding to the one or more pieces of AI service information; and the first AI node obtains a neural network model or neural network models of the AI node or the AI nodes corresponding to the one or more pieces of AI service information, where the neural network model is used to implement an AI service. Based on this solution, the neural network model may be obtained from the corresponding AI node based on the AI service information recorded in the local AI service list, to implement the AI service.

With reference to the first aspect, in a possible design, the candidate AI service information includes model identification information, the model identification information identifies a neural network model corresponding to the candidate AI service information, and that the first AI node obtains a neural network model or neural network models of the AI node or the AI nodes corresponding to the one or more pieces of AI service information includes: The first AI node obtains, from the AI node or the AI nodes corresponding to the one or more pieces of AI service information, the neural network model corresponding to the model identification information included in the one or more pieces of AI service information. Based on this solution, a manner of obtaining the neural network model from the AI node is provided.

With reference to the first aspect, in a possible design, that the first AI node obtains a neural network model or neural network models of the AI node or the AI nodes corresponding to the one or more pieces of AI service information includes: The first AI node obtains the preconfigured neural network model from the AI node or the AI nodes corresponding to the one or more pieces of AI service information. Based on this solution, a manner of obtaining the neural network model from the AI node is provided.

With reference to the first aspect, in a possible design, the measurement configuration information includes identification information of the to-be-measured AI node and identification information of the AI service that needs to be measured.

With reference to the first aspect, in a possible design, the candidate AI service information includes at least one of the following information: the AI service identification information, the AI node identification information, the model identification information, model parameter information, the performance information, and time validity information, where the AI service identification information identifies the AI service corresponding to the candidate AI service information, the AI node identification information identifies the to-be-measured AI node corresponding to the candidate AI service information, the model identification information identifies the neural network model corresponding to the candidate AI service information, the model parameter information is parameter information of the neural network model corresponding to the candidate AI service information, the performance information represents performance of the AI service corresponding to the candidate AI service information, and the time validity information represents valid time of the candidate AI service information.

With reference to the first aspect, in a possible design, that the first AI node receives a measurement report from the terminal device includes: The first AI node receives the measurement report from the terminal device through a second network device, where the second network device is a network device corresponding to a second AI node in the to-be-measured AI node, and the candidate AI service information is candidate AI service information corresponding to the second AI node. Based on this solution, the terminal device may send the corresponding measurement report to the first AI node by using the to-be-measured AI node.

With reference to the first aspect, in a possible design, the measurement report further includes identification information of the first AI node, and the identification information of the first AI node is used by the second network device to send the measurement report to the first AI node.

According to a second aspect, an AI service information obtaining method is provided. A communication apparatus (body) that performs the method may be a terminal device, or may be a component of the terminal device, for example, a processor, a chip, or a chip system of the terminal device. The following uses an example in which the execution body is the terminal device for description. The method includes: The terminal device receives measurement configuration information from a first AI node, where the measurement configuration information indicates to measure an AI service of a to-be-measured AI node; and the terminal device sends a measurement report to the first AI node, where the measurement report includes candidate AI service information, the candidate AI service information is AI service information that meets a first condition and that is in one or more pieces of AI service information obtained by measuring the to-be-measured AI node based on the measurement configuration information, and the first condition is carried in the measurement configuration information. Based on the technical solutions in embodiments of this application, an AI node may obtain, by interacting with the terminal device, AI service information that is of another AI node and that meets a specific condition, to facilitate collaborative management between different AI nodes in an AI network.

With reference to the second aspect, in a possible design, the measurement configuration information includes identification information of the to-be-measured AI node and identification information of the AI service that needs to be measured.

With reference to the second aspect, in a possible design, the candidate AI service information includes at least one of the following information: AI service identification information, AI node identification information, model identification information, model parameter information, performance information, and time validity information, where the AI service identification information identifies an AI service corresponding to the candidate AI service information, the AI node identification information identifies the to-be-measured AI node corresponding to the candidate AI service information, the model identification information identifies a neural network model corresponding to the candidate AI service information, the model parameter information is parameter information of the neural network model corresponding to the candidate AI service information, the performance information represents performance of the AI service corresponding to the candidate AI service information, and the time validity information represents valid time of the candidate AI service information.

With reference to the second aspect, in a possible design, that the terminal device sends a measurement report to the first AI node includes:

The terminal device sends the measurement report to the first AI node through a second network device, where the second network device is a network device corresponding to a second AI node in the to-be-measured AI node, and the candidate AI service information is candidate AI service information corresponding to the second AI node.

With reference to the second aspect, in a possible design, the measurement report further includes identification information of the first AI node, and the identification information of the first AI node is used by the second network device to send the measurement report to the first AI node.

According to a third aspect, an AI service information obtaining method is provided. A communication apparatus (body) that performs the method may be a network device corresponding to a third AI node, or may be a component of the network device corresponding to the third AI node, for example, a processor, a chip, or a chip system. The following uses an example in which the execution body is the third AI node for description. The method includes: The third AI node receives subscription information from a terminal device, where the subscription information is used to request to subscribe, in a subscription area, to an AI service that meets a second condition; and the third AI node sends the subscription information to one or more fourth AI nodes in the subscription area, to enable the fourth AI node to send, based on the subscription information, a subscription result to the terminal device, where the subscription result includes target AI service information, and an AI service corresponding to the target AI service information meets the second condition. Based on the AI service information obtaining method provided in embodiments of this application, the terminal device may subscribe to an expected AI service from an AI node, and obtain AI service information corresponding to the AI service that meets a condition, so that the terminal device can subscribe, in an AI network, to the AI service that meets the condition.

With reference to the third aspect, in a possible design, the subscription information is identified by first identification information. Based on this solution, the first identification information identifying the subscription information is defined.

With reference to the third aspect, in a possible design, the first identification information is generated by the third AI node, or the first identification information is generated by the terminal device. Based on this solution, two manners of generating the first identification information are provided.

With reference to the third aspect, in a possible design, after the third AI node receives subscription information from a terminal device, the method further includes: The third AI node determines that the terminal device is currently located in a first notification area, and associates the first identification information with second identification information, where the second identification information identifies the first notification area; and the third AI node sends the second identification information associated with the first identification information to the one or more fourth AI nodes. Based on this solution, after determining that the terminal device is located in the first notification area, the third AI node may send the second identification information associated with the first identification information to the fourth AI node, so that the fourth AI node may learn, based on the second identification information associated with the first identification information, that the terminal device that sends the subscription information is currently located in the first notification area.

With reference to the third aspect, in a possible design, the first notification area is set based on a cell and/or a beam. Based on this solution, a manner of planning the notification area is provided.

With reference to the third aspect, in a possible design, the subscription information includes at least one of the following information: AI service identification information identifying the AI service requested to be subscribed to, user identification information identifying the terminal device, service level information representing the second condition, subscription area information representing the subscription area, model identification information, model parameter information, and subscription validity period information, where the model identification information identifies a neural network model corresponding to the AI service to which the subscription information is used to request to subscribe, the model parameter information is parameter information of the neural network model corresponding to the AI service to which the subscription information is used to request to subscribe, and the subscription validity period information represents valid time of the subscription information.

With reference to the third aspect, in a possible design, the subscription area information is determined by the terminal device, or the subscription area information is determined by the third AI node. Based on this solution, two manners of determining the subscription information are provided.

According to a fourth aspect, an AI service information method is provided. A communication apparatus (body) that performs the method may be a terminal device, or may be a component of the terminal device, for example, a processor, a chip, or a chip system of the terminal device. The following uses an example in which the execution body is the terminal device for description. The method includes: The terminal device sends subscription information to a third AI node, where the subscription information is used to request to subscribe, in a subscription area, to an AI service that meets a second condition; and the terminal device receives a subscription result from one or more fourth AI nodes in the subscription area, where the subscription result includes target AI service information, and an AI service corresponding to the target AI service information meets the second condition. Based on the AI service information obtaining method provided in embodiments of this application, the terminal device may subscribe to an expected AI service from an AI node, and obtain AI service information corresponding to the AI service that meets a condition, so that the terminal device can subscribe, in an AI network, to the AI service that meets the condition.

With reference to the fourth aspect, in a possible design, the subscription information is identified by first identification information. Based on this solution, the first identification information identifying the subscription information is defined.

With reference to the fourth aspect, in a possible design, the first identification information is generated by the third AI node, or the first identification information is generated by the terminal device. Based on this solution, two manners of generating the first identification information are provided.

With reference to the fourth aspect, in a possible design, after the terminal device sends subscription information to a third AI node, the method further includes: The terminal device obtains second identification information associated with the first identification information, where the second identification information identifies a first notification area in which the terminal device is currently located. Based on this solution, the terminal device may obtain the second identification information identifying the notification area in which the terminal device is currently located.

With reference to the fourth aspect, in a possible design, the method further includes: The terminal device obtains third identification information, where the third identification information identifies a second notification area in which the terminal device is currently located; and the terminal device determines that the third identification information is inconsistent with the second identification information, and sends an update request to the one or more fourth AI nodes, where the update request is used to request to associate the first identification information with the third identification information. Based on this solution, after determining that the second notification area in which the terminal device is currently located is inconsistent with the first notification area in which the terminal device is located when the subscription information is sent, the terminal device may initiate the update request to the fourth AI node, so that the fourth AI node can update the second identification information associated with the first identification information to the third identification information, and determine that the terminal device is currently located in the second notification area.

With reference to the fourth aspect, in a possible design, that the terminal device obtains third identification information includes: The terminal device receives the third identification information from a third network device, where the third network device is located in the second notification area. Based on this solution, the terminal device may obtain the third identification information through the network device in the second notification area.

With reference to the fourth aspect, in a possible design, the first notification area is set based on a cell and/or a beam. Based on this solution, a manner of planning the notification area is provided.

With reference to the fourth aspect, in a possible design, the subscription information includes at least one of the following information: AI service identification information identifying the AI service requested to be subscribed to, user identification information identifying the terminal device, service level information representing the second condition, subscription area information representing the subscription area, model identification information, model parameter information, and subscription validity period information, where the model identification information identifies a neural network model corresponding to the AI service to which the subscription information is used to request to subscribe, the model parameter information is parameter information of the neural network model corresponding to the AI service to which the subscription information is used to request to subscribe, and the subscription validity period information represents valid time of the subscription information.

With reference to the fourth aspect, in a possible design, the subscription area information is determined by the terminal device, or the subscription area information is determined by the third AI node. Based on this solution, two manners of determining the subscription information are provided.

According to a fifth aspect, a communication apparatus is provided to implement the foregoing methods. The communication apparatus may be the network device corresponding to the first AI node in the first aspect, an apparatus including the network device corresponding to the first Al node, or an apparatus included in the network device corresponding to the first Al node, for example, a chip. Alternatively, the communication apparatus may be the terminal device in the second aspect, an apparatus including the terminal device, or an apparatus included in the terminal device. Alternatively, the communication apparatus may be the network device corresponding to the third AI node in the third aspect, an apparatus including the network device corresponding to the third AI node, or an apparatus included in the network device corresponding to the third AI node, for example, a chip. Alternatively, the communication apparatus may be the terminal device in the fourth aspect, an apparatus including the terminal device, or an apparatus included in the terminal device. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

According to a sixth aspect, a communication apparatus is provided. The communication apparatus includes a processor and a memory. The memory is configured to store computer instructions, the processor is configured to execute the instructions stored in the memory, and when the processor executes the instructions, the communication apparatus is enabled to perform the method according to any one of the foregoing aspects. The communication apparatus may be the network device corresponding to the first AI node in the first aspect, an apparatus including the network device corresponding to the first AI node, or an apparatus included in the network device corresponding to the first AI node, for example, a chip. Alternatively, the communication apparatus may be the terminal device in the second aspect, an apparatus including the terminal device, or an apparatus included in the terminal device, for example, a chip. Alternatively, the communication apparatus may be the network device corresponding to the third AI node in the third aspect, an apparatus including the network device corresponding to the third AI node, or an apparatus included in the network device corresponding to the third AI node, for example, a chip. Alternatively, the communication apparatus may be the terminal device in the fourth aspect, an apparatus including the terminal device, or an apparatus included in the terminal device, for example, a chip.

According to a seventh aspect, a communication apparatus is provided. The communication apparatus includes a processor and an interface circuit. The interface circuit is configured to communicate with a module outside the communication apparatus, and the processor is configured to run a computer program or instructions to perform the method according to any one of the foregoing aspects. The communication apparatus may be the network device corresponding to the first AI node in the first aspect, an apparatus including the network device corresponding to the first AI node, or an apparatus included in the network device corresponding to the first AI node, for example, a chip. Alternatively, the communication apparatus may be the terminal device in the second aspect, an apparatus including the terminal device, or an apparatus included in the terminal device, for example, a chip. Alternatively, the communication apparatus may be the network device corresponding to the third AI node in the third aspect, an apparatus including the network device corresponding to the third AI node, or an apparatus included in the network device corresponding to the third AI node, for example, a chip. Alternatively, the communication apparatus may be the terminal device in the fourth aspect, an apparatus including the terminal device, or an apparatus included in the terminal device, for example, a chip.

Alternatively, the interface circuit may be a code/data read/write interface circuit, and the interface circuit is configured to receive computer-executable instructions (the computer-executable instructions are stored in a memory, and may be read from the memory directly or through another component) and transmit the computer-executable instructions to the processor, so that the processor runs the computer-executable instructions to perform the method according to any one of the foregoing aspects.

In some possible designs, the communication apparatus may be a chip or a chip system.

According to an eighth aspect, a communication apparatus is provided. The communication apparatus includes a processor. The processor is configured to: after being coupled to a memory and reading instructions in the memory, perform the method according to any one of the foregoing aspects according to the instructions. The communication apparatus may be the network device corresponding to the first AI node in the first aspect, an apparatus including the network device corresponding to the first AI node, or an apparatus included in the network device corresponding to the first AI node, for example, a chip. Alternatively, the communication apparatus may be the terminal device in the second aspect, an apparatus including the terminal device, or an apparatus included in the terminal device, for example, a chip. Alternatively, the communication apparatus may be the network device corresponding to the third AI node in the third aspect, an apparatus including the network device corresponding to the third AI node, or an apparatus included in the network device corresponding to the third AI node, for example, a chip. Alternatively, the communication apparatus may be the terminal device in the fourth aspect, an apparatus including the terminal device, or an apparatus included in the terminal device, for example, a chip.

According to a ninth aspect, a computer-readable storage medium is provided. The computer-readable storage medium stores instructions, and when the instructions are run on a communication apparatus, the communication apparatus is enabled to perform the method according to any one of the foregoing aspects. The communication apparatus may be the network device corresponding to the first AI node in the first aspect, an apparatus including the network device corresponding to the first AI node, or an apparatus included in the network device corresponding to the first AI node, for example, a chip. Alternatively, the communication apparatus may be the terminal device in the second aspect, an apparatus including the terminal device, or an apparatus included in the terminal device, for example, a chip. Alternatively, the communication apparatus may be the network device corresponding to the third AI node in the third aspect, an apparatus including the network device corresponding to the third AI node, or an apparatus included in the network device corresponding to the third AI node, for example, a chip. Alternatively, the communication apparatus may be the terminal device in the fourth aspect, an apparatus including the terminal device, or an apparatus included in the terminal device, for example, a chip.

According to a tenth aspect, a computer program product including instructions is provided. When the computer program product runs on a communication apparatus, the communication apparatus is enabled to perform the method according to any one of the foregoing aspects. The communication apparatus may be the network device corresponding to the first AI node in the first aspect, an apparatus including the network device corresponding to the first AI node, or an apparatus included in the network device corresponding to the first AI node, for example, a chip. Alternatively, the communication apparatus may be the terminal device in the second aspect, an apparatus including the terminal device, or an apparatus included in the terminal device, for example, a chip. Alternatively, the communication apparatus may be the network device corresponding to the third AI node in the third aspect, an apparatus including the network device corresponding to the third AI node, or an apparatus included in the network device corresponding to the third AI node, for example, a chip. Alternatively, the communication apparatus may be the terminal device in the fourth aspect, an apparatus including the terminal device, or an apparatus included in the terminal device, for example, a chip.

According to an eleventh aspect, a communication apparatus (for example, the communication apparatus may be a chip or a chip system) is provided. The communication apparatus includes a processor, configured to implement a function according to any one of the foregoing aspects. In a possible design, the communication apparatus further includes a memory, and the memory is configured to store necessary program instructions and data. When the communication apparatus is a chip system, the communication apparatus may include a chip, or may include a chip and another discrete component.

For technical effects brought by any design manner in the fifth aspect to the eleventh aspect, refer to the technical effects brought by different design manners in the first aspect to the fourth aspect. Details are not described herein again.

According to a twelfth aspect, a communication system is provided. The communication system includes a network device and a terminal device. The network device may perform the method in the first aspect, and the terminal device may perform the method in the second aspect. Alternatively, the network device may perform the method in the third aspect, and the terminal device may perform the method in the fourth aspect.

### BRIEF DESCRIPTION OF DRAWINGS

FIG. 1a is a diagram 1 of an architecture of a communication system according to an embodiment of this application;FIG. 1b is a diagram 2 of an architecture of a communication system according to an embodiment of this application;
FIG. 2 is a diagram of a structure of a communication apparatus according to an embodiment of this application;
FIG. 3 is an interaction diagram of an AI service information obtaining method according to an embodiment of this application;
FIG. 4 is a diagram of communication between a first AI node and a RAN device according to an embodiment of this application;
FIG. 5 is an interaction diagram of a method for obtaining a neural network model according to an embodiment of this application;
FIG. 6 is an interaction diagram of another method for obtaining a neural network model according to an embodiment of this application;
FIG. 7 is an interaction diagram of another AI service information obtaining method according to an embodiment of this application;
FIG. 8 is a diagram of a tracking area;
FIG. 9 is a diagram of a method for performing mobility management on a terminal device in an AI network according to an embodiment of this application;
FIG. 10 is a diagram of an example of an AI service information obtaining method according to an embodiment of this application;
FIG. 11 is a diagram of a structure of another communication apparatus according to an embodiment of this application; and
FIG. 12 is a diagram of a structure of still another communication apparatus according to an embodiment of this application.

### DESCRIPTION OF EMBODIMENTS

For ease of understanding of technical solutions in embodiments of this application, the following first briefly describes related technologies in this application.

The intelligentization of a wireless network is an important evolution trend. Currently, an AI capability is introduced to a 5G network, to provide an AI service (AI service) for a terminal device. Specifically, an AI node (AI node) is deployed in the network having the AI capability, and the network may provide an AI service such as data analysis, voice recognition, or image recognition for the terminal device by using a neural network model on the AI node. Optionally, in addition to providing the AI service for the terminal device, the AI node may further support functions such as data collection and neural network model training. In other words, the network may use an AI-based method to replace a numerical formula-based method in an original network function by using the AI node, to improve network resource utilization efficiency and improve user service experience.

Currently, the AI node may be independently deployed on a network device dedicated to implementing a function of the AI node, or may be deployed as a functional module on an existing network device, for example, may be deployed on a radio access network (radio access network, RAN) device. It may be understood that when the AI node is used as an independent logical unit (in terms of hardware or software), the AI node may form an AI network logically separated from an access network formed by the RAN device.

In the AI network, a locally deployed AI node can obtain only data within a local observation range of the AI node. Based on different services, the local AI node may not be able to provide an optimal AI service for the terminal device. It can be learned that, to meet requirements of different services, when there are a plurality of selectable AI nodes in the AI network, the terminal device needs to dynamically select an appropriate AI node, so that the selected AI node can provide, for the terminal device, an AI service that meets a requirement. Currently, the appropriate AI node may be selected based on related information about an AI service provided by each AI node, that is, AI service information. Therefore, to enable the terminal device in the network to dynamically select the AI node to optimize overall network performance, a feasible solution is to enable the terminal device and the AI node in the AI network to exchange AI service information, to facilitate collaborative management between AI nodes. However, there is no solution of how to enable the terminal device and the AI node in the AI network to exchange the AI service information. Based on this, embodiments of this application provide an AI service information obtaining method, to implement AI service information exchange between the terminal device and the AI node.

The following describes the technical solutions in embodiments of this application with reference to the accompanying drawings in embodiments of this application. In descriptions of this application, unless otherwise specified, "/" indicates an "or" relationship between associated objects. For example, A/B may represent A or B. In this application, the term "and/or" describes only an association relationship between associated objects and represents that three relationships may exist. For example, A and/or B may represent the following three cases: Only A exists, both A and B exist, and only B exists. A and B may be singular or plural. In addition, in the descriptions of this application, "a plurality of" means more than two (including two) unless otherwise specified. "At least one of the following items (pieces)" or a similar expression thereof means any combination of these items, including any combination of singular items (pieces) or plural items (pieces). For example, at least one (piece) of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The technical solutions in embodiments of this application may be applied to various communication systems. The communication system may be a 3rd generation partnership project (3rd generation partnership project, 3GPP) communication system, for example, a long term evolution (long term evolution, LTE) system, a 5G system, a vehicle to everything (vehicle to everything, V2X) system, a system in LTE and 5G hybrid networking, a device-to-device (device-to-device, D2D) communication system, a machine-to-machine (machine-to-machine, M2M) communication system, an internet of things (internet of things, IoT), or another next-generation communication system. Alternatively, the communication system may be a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine-type communication (machine-type communication, MTC), massive machine-type communications (massive machine-type communications, mMTC), D2D, V2X, and IoT.

The communication systems and the communication scenarios that are applicable to this application are merely examples for description, and the communication systems and the communication scenarios that are applicable to this application are not limited thereto. A person of ordinary skill in the art may learn that, with evolution of a network architecture and emergence of a new service scenario, the technical solutions provided in embodiments of this application are also applicable to a similar technical problem. Unified descriptions are provided herein, and details are not described below again.

In a possible implementation, this application provides a communication system to which this application is applicable. The communication system may include one or more first AI nodes and one or more terminal devices, or the communication system may include one or more third AI nodes and one or more terminal devices.

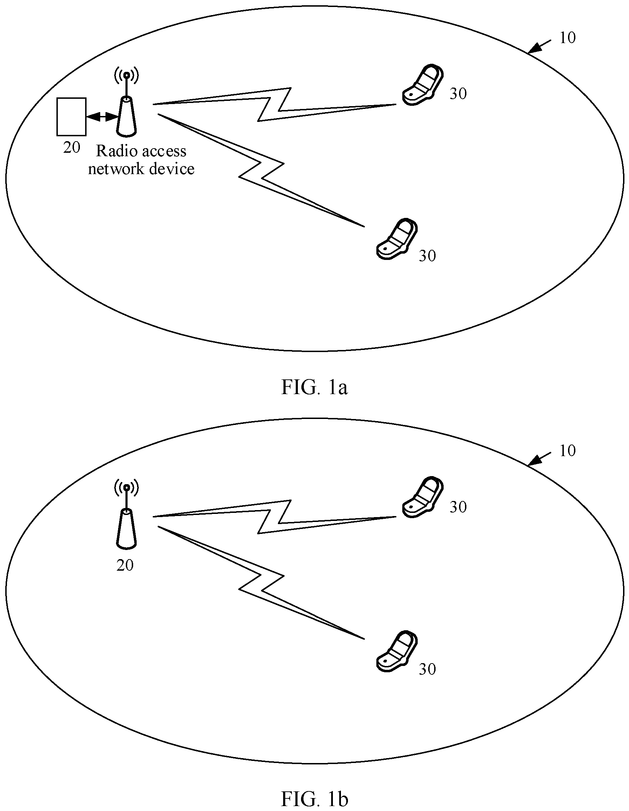

Optionally, in embodiments of this application, an AI node may be independently deployed on a network device dedicated to implementing a function of the AI node. In this scenario, the AI node or the network device configured to implement the function of the AI node corresponds to a radio access network device, and the AI node may communicate with the corresponding radio access network device, so that the AI node can communicate with a terminal device through the corresponding radio access network device. It should be noted that the AI node and the radio access network device may be in one-to-one correspondence, or may be in one-to-many correspondence in which one AI node corresponds to a plurality of radio access network devices. For example, it is assumed that the AI node and the radio access network device are in one-to-one correspondence, the communication system 10 provided in this embodiment of this application may be shown in FIG. 1a. A first AI node 20 or a third AI node 20 communicates with a terminal device 30 through a corresponding radio access network device.

Optionally, in embodiments of this application, an AI node may be deployed on a radio access network device as a functional module, and the radio access network device on which the AI node is deployed may also be referred to as a radio access network device corresponding to the AI node. The AI node may communicate with a terminal device by using a wireless communication function provided by the corresponding radio access network device. For example, in this scenario, the communication system 10 provided in this embodiment of this application may be shown in FIG. 1b. A first AI node 20 or a third AI node 20 is deployed on a radio access network device, and communicates with a terminal device 30.

Optionally, when the communication system 10 provided in this application includes the first AI node 20 and the terminal device 30, the communication system 10 may further include a to-be-measured AI node. For example, the first AI node 20 interacts with any terminal device 30 in FIG. 1a or FIG. 1b. In a possible implementation, the first AI node 20 sends measurement configuration information to the terminal device 30, where the measurement configuration information indicates to measure an AI service of the to-be-measured AI node. After receiving the measurement configuration information, the terminal device 30 measures the to-be-measured AI node based on the measurement configuration information, to obtain one or more pieces of AI service information, and determines, from the one or more pieces of AI service information based on a first condition carried in the measurement configuration information, candidate AI service information that meets the first condition. After determining the candidate AI service information, the first AI node 20 sends the candidate AI service information to the first AI node 20 by using a measurement report. Specific implementations and technical effects of the solution are described in detail in subsequent method embodiments, and details are not described herein again.

Optionally, when the communication system 10 provided in this application includes the third AI node 20 and the terminal device 30, the communication system 10 provided in this application may further include a fourth AI node. For example, the third AI node 20 interacts with any terminal device 30 in FIG. 1a or FIG. 1b. In a possible implementation, the terminal device 30 sends subscription information to the third AI node 20, where the subscription information is used to request to subscribe, in a subscription area, to an AI service that meets a second condition. After receiving the subscription information, the third AI node 20 sends the subscription information to each AI node in the subscription area, so that one or more fourth AI nodes in the subscription area send a subscription result to the terminal device based on the subscription information, where the subscription result includes target AI service information, and an AI service corresponding to the target AI service information meets the second condition.

Optionally, the radio access network device in embodiments of this application is a device that connects the terminal device to a wireless network. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a wireless fidelity (wireless fidelity, Wi-Fi) system, or the like; or may be a module or a unit that completes some functions of the base station, for example, a central unit (central unit, CU) or a distributed unit (distributed unit, DU). A specific technology and a specific device form that are used by the radio access network device are not limited in embodiments of this application.

Optionally, the terminal device in embodiments of this application may be a device configured to implement a wireless communication function, for example, a terminal or a chip that can be used in the terminal. The terminal may also be referred to as user equipment (user equipment, UE), a mobile station, a mobile terminal, or the like. The terminal may be a mobile phone, a tablet computer, a computer having wireless sending and receiving functions, a virtual reality terminal device, an augmented reality terminal device, a wireless terminal in industrial control, a wireless terminal in self driving, a wireless terminal in remote surgery, a wireless terminal in a smart grid, a wireless terminal in transportation safety, a wireless terminal in a smart city, a wireless terminal in a smart home, and the like. A specific technology and a specific device form used by the terminal device are not limited in embodiments of this application.

Optionally, in embodiments of this application, the radio access network device and the terminal device may communicate with each other by using a licensed spectrum, may communicate with each other by using an unlicensed spectrum, or may communicate with each other by using both the licensed spectrum and the unlicensed spectrum. The radio access network device and the terminal device may communicate with each other by using a spectrum below 6 gigahertz (gigahertz, GHz), may communicate with each other by using a spectrum above 6 GHz, or may communicate with each other by using both the spectrum below 6 GHz and the spectrum above 6 GHz. Spectrum resources used by the radio access network device and the terminal device are not limited in embodiments of this application.

Optionally, in embodiments of this application, the network device and the terminal device may be deployed on the land, including an indoor device, an outdoor device, a handheld device, or a vehicle-mounted device; may be deployed on the water; or may be deployed on an airplane, a balloon, and a satellite in the air. An application scenario of the network device and the terminal device is not limited in embodiments of this application.

A related function of the AI node or the terminal device in this application may be implemented by one device, may be jointly implemented by a plurality of devices, may be implemented by one or more functional modules in one device, may be implemented by one or more chips, or may be implemented by a system-on-chip (system-on-chip, SoC) or a chip system. The chip system may include a chip, or may include a chip and another discrete device. This is not specifically limited in embodiments of this application.

It may be understood that the foregoing function may be a network element in a hardware device, a software function running on dedicated hardware, a combination of hardware and software, or a virtualized function instantiated on a platform (for example, a cloud platform).

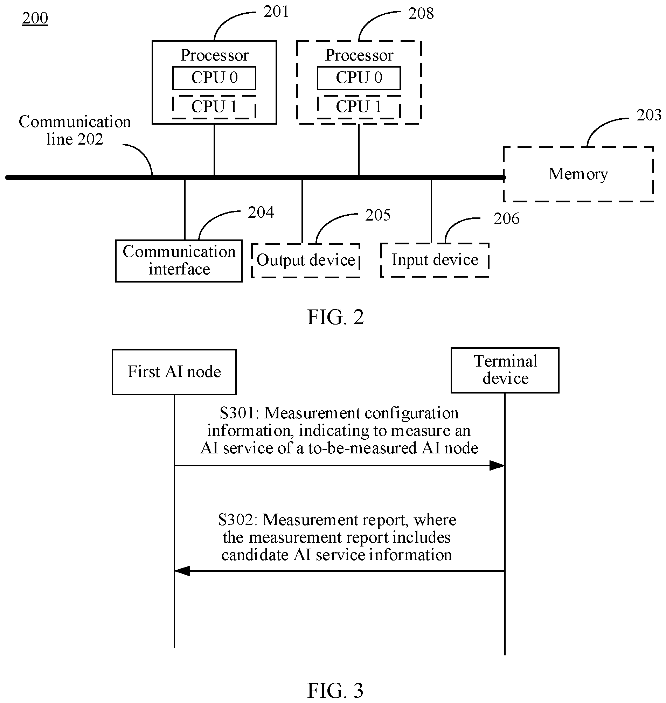

For example, the related function of the AI node or the terminal device in this application may be implemented by using a communication apparatus 200 in FIG. 2. FIG. 2 is a diagram of a structure of the communication apparatus 200 according to an embodiment of this application. The communication apparatus 200 includes one or more processors 201, a communication line 202, and at least one communication interface (only an example in which the communication apparatus 200 includes a communication interface 204 and one processor 201 is used in FIG. 2 for description). Optionally, the communication apparatus 200 may further include a memory 203.

The processor 201 may be a general-purpose central processing unit (central processing unit, CPU), a microprocessor, an application-specific integrated circuit (application-specific integrated circuit, ASIC), or one or more integrated circuits configured to control execution of a program in the solutions in this application.

The communication line 202 may be used for communication between different components included in the communication apparatus 200.

The communication interface 204 may be a transceiver module, and is configured to communicate with another device or a communication network, such as an Ethernet network, a radio access network (radio access network, RAN), or a wireless local area network (wireless local area network, WLAN). For example, the transceiver module may be an apparatus such as a transceiver or a transceiver machine. Optionally, the communication interface 204 may alternatively be a transceiver circuit located in the processor 201, and is configured to implement signal input and signal output of the processor.

The memory 203 may be an apparatus having a storage function. Optionally, the memory 203 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, this is not limited thereto. The memory may exist independently, and is connected to the processor through the communication line 202. The memory may alternatively be integrated with the processor.

The memory 203 is configured to store computer-executable instructions for executing the solutions in this application, and the processor 201 controls the execution. The processor 201 is configured to execute the computer-executable instructions stored in the memory 203, to implement the method provided in embodiments of this application.

Alternatively, optionally, in embodiments of this application, the processor 201 may perform processing-related functions in a method provided in the following embodiments of this application, and the communication interface 204 is responsible for communication with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 201 may include one or more CPUs, for example, a CPU 0 and a CPU 1 in FIG. 2.

During specific implementation, in an embodiment, the communication apparatus 200 may include a plurality of processors, for example, the processor 201 and a processor 208 in FIG. 2. Each of the processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

During specific implementation, in an embodiment, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensor device.

It should be noted that the composition structure shown in FIG. 2 does not constitute a limitation on the communication apparatus. In addition to the components shown in FIG. 2, the communication apparatus may include more or fewer components than those shown in the figure, or combine some components, or have different component arrangements. The components shown in the figure may be implemented by hardware, software, or a combination of software and hardware.

With reference to FIG. 1a to FIG. 2, the following describes in detail an AI service information obtaining method provided in embodiments of this application by using an example in which the first AI node 20 shown in FIG. 1a or FIG. 1b interacts with any terminal device 30. As shown in FIG. 3, the AI service information obtaining method includes S301 and S302.

S301: The first AI node sends measurement configuration information to the terminal device, where the measurement configuration information indicates to measure an AI service of a to-be-measured AI node.

S302: The first AI node receives a measurement report from the terminal device, where the measurement report includes candidate AI service information, the candidate AI service information is AI service information that meets a first condition and that is in one or more pieces of AI service information obtained by measuring the to-be-measured AI node based on the measurement configuration information, and the first condition is carried in the measurement configuration information.

In S301, the first AI node sends the measurement configuration information to the terminal device through a corresponding network device. After receiving the measurement configuration information, the terminal device measures the AI service of the to-be-measured AI node based on the measurement configuration information.

In embodiments of this application, the measurement configuration information includes the first condition, identification information of the to-be-measured AI node, and identification information of the AI service that needs to be measured. Descriptions are separately provided below.

In the measurement configuration information, the first condition indicates a condition that needs to be met when the terminal device sends (or reports) the measurement report to the first AI node based on a measurement result after the terminal device performs measurement based on the measurement configuration information. Therefore, the first condition may also be referred to as a reporting condition of the measurement report. Optionally, based on an actual requirement, the measurement configuration information may include one or more first conditions. For example, the first condition may be a threshold that performance of the AI service needs to meet. If the performance of the measured AI service meets the threshold, the terminal device may report, to the first AI node, the measurement result obtained by measuring the AI service. If the performance of the measured AI service does not meet the threshold, the terminal device does not report the measurement result.

In the measurement configuration information, the identification information of the to-be-measured AI node is used by the terminal device to determine the to-be-measured AI node that needs to be measured, and may also be referred to as measurement list information. Optionally, based on the to-be-measured AI node that needs to be measured, the measurement configuration information may include identification information of one or more to-be-measured AI nodes. For example, the identification information of the to-be-measured AI node may be an identity (identity, ID) of the to-be-measured AI node, that is, an AI node ID (AI node ID) of the to-be-measured AI node. Optionally, in embodiments of this application, the to-be-measured AI node that needs to be measured may be an AI node that is determined by the first AI node based on an actual need or a service scenario and that is within a specific area range.

In the measurement configuration information, the identification information of the AI service that needs to be measured is used by the terminal device to determine the AI service that needs to be measured. In other words, the identification information of the AI service that needs to be measured is used by the terminal device to determine a measurement target that needs to be measured. The identification information of the AI service that needs to be measured may also be referred to as measurement target information. Optionally, based on the AI service that needs to be measured, the measurement configuration information may include the identification information of the one or more AI services that need to be measured. For example, the identification information of the AI service may be an ID of the AI service, that is, an AI service ID (AI service ID). Optionally, in embodiments of this application, the AI service that needs to be measured may be determined by the first AI node based on an actual need or a service scenario.

Optionally, in embodiments of this application, in the measurement configuration information, the first condition may correspond to the identification information of the AI service that needs to be measured. It may be understood that different AI services may correspond to different reporting conditions. For example, a first condition corresponding to an AI service whose AI service ID is 1 may be that performance is greater than a first threshold, and a first condition corresponding to an AI service whose AI service ID is 2 may be that performance is greater than a second threshold. Alternatively, different AI services may correspond to a same reporting condition, and the measurement configuration information may include only one first condition. This is not specifically limited in embodiments of this application.

It should be noted that, in embodiments of this application, a correspondence between the identification information of the AI node and the AI node and a correspondence between the identification information of the AI service and the AI service are negotiated or configured between the terminal device and the AI node. In other words, the terminal device and the AI node may determine a same AI node based on same identification information of the AI node, or may determine a same AI service based on same identification information of the AI service.

After receiving the measurement configuration information, the terminal device may determine, based on information included in the measurement configuration information, the to-be-measured AI node that needs to be measured, the AI service that needs to be measured, and the condition that needs to be met for reporting the measurement result. After the terminal device measures, based on indication of the measurement configuration information, the AI service that needs to be measured and that is of the to-be-measured AI node, for each to-be-measured AI node, the terminal device may obtain one or more pieces of AI service information, that is, a measurement result of the to-be-measured AI node. Then, the terminal device determines, from the obtained candidate AI service information, AI service information that meets the first condition as the candidate AI service information.

In embodiments of this application, the terminal device may measure the to-be-measured AI node by using the network device (for example, a RAN device) corresponding to the to-be-measured AI node.

The following describes the AI service information in detail. In embodiments of this application, the AI service information obtained by the terminal device by measuring the to-be-measured node may include at least one of the following information:
the AI service identification information, the AI node identification information, model identification information, model parameter information, performance information, and time validity information.

The AI service identification information identifies an AI service corresponding to the AI service information. In other words, the terminal device may indicate a type of the measured AI service by using the AI service identification information.

The AI node identification information identifies an AI node corresponding to the AI service information. In other words, the terminal device may indicate the measured AI node by using the AI node identification information.

The model identification information identifies a neural network model corresponding to the AI service information. In embodiments of this application, one or more neural network models may be configured on the AI node to implement the AI service, and the terminal device may indicate a type of the neural network model for the measurement by using the model identification information.

The model parameter information is parameter information of the neural network model corresponding to the AI service information. In embodiments of this application, the model parameter information may include one or more of the following parameter information: a size (size), an input format (input format), an output format (output format), or the like of the neural network model. This is not specifically limited in embodiments of this application.

The performance information represents performance of the AI service corresponding to the AI service information. In embodiments of this application, the performance information may include one or more of the following dimension information: accuracy (accuracy), inference accuracy, model training convergence time, or the like. This is not specifically limited in embodiments of this application. The following explains the performance of the AI service with reference to a specific example. It is assumed that the AI service is image classification, and 99 of 100 images can be correctly classified by using the AI service. In this case, accuracy of the AI service is 99%. Optionally, the performance information may be represented by information such as a value, an interval, or a level specified in a protocol. For example, when the performance information includes the accuracy, it is specified that a corresponding level is A when the accuracy is 90% to 95%. If the accuracy obtained by the terminal device by measuring the AI service is 90%, in the AI service information, the accuracy included in the performance information may be a value 90% or a level A.

The time validity information represents valid time of the AI service information. The AI service information is valid within the valid time, and becomes invalid when the valid time expires. Optionally, the time validity information may be represented by time, for example, time 0 (time0, T0) to time 1 (time1, T1), or may be represented by duration, for example, 5 minutes (minute, min).

For example, it is assumed that the AI service information includes the AI service identification information, the AI node identification information, the model parameter information, the performance information, and the time validity information, where the model parameter information includes size, input format, and output format parameter information, and the performance information includes accuracy information. In this case, a possible form of the AI service information may be shown in Table 1.

**Table 1**

| AI service ID | AI node ID | Model information (model information) | Performance (performance) | Validity (validity) |
|---|---|---|---|---|
| service 1 | 001 | size: 3, 10 | accuracy: 99% | T0 to T1 |
| | | input format: integer vector | | |
| | | output format: integer vector | | |

In Table 1, the AI service ID is AI service identification information, and the service 1 corresponding to the AI service ID indicates that the AI service information is obtained by measuring the AI service: the service 1. The AI node ID is AI node identification information, and 001 corresponding to the AI node ID indicates that the AI service information is obtained by measuring the AI node 001. The model information is model parameter information. A size included in the model information and 3, 10 corresponding to the size indicate that a neural network model on the AI node 001 has three layers, and each layer has 10 neurons. The input format and the integer vector corresponding to the input format indicate that an input format of the neural network model on the AI node 001 is the integer vector, and the output format and the integer vector corresponding to the output format indicate that an input format of the neural network model on the AI node 001 is the integer vector. The performance is performance information, and accuracy included in the performance and 99% corresponding to the accuracy indicate that accuracy of the AI service service 1 is 99%. The validity is time validity information, and T0 to T 1 corresponding to the validity indicates that valid time of the AI service information lasts from T0 to T1.

It may be understood that, because the candidate AI service information is AI service information that meets the first condition and that is in the AI service information obtained by the terminal device by measuring the to-be-measured node, if the AI service information is replaced with the candidate AI service information and the AI node is replaced with the to-be-measured AI node in the descriptions of the information included above, the descriptions of the AI service information may also be applicable to the candidate AI service information.

For S302, after determining the candidate AI service information, the terminal device sends the candidate AI service information to the first AI node by using the measurement report, so that the first AI node can obtain, based on the received measurement report, the AI service information that meets the first condition.

Based on the technical solutions in embodiments of this application, the AI node may obtain, by interacting with the terminal device, AI service information that is of another AI node and that meets a specific condition, to facilitate collaborative management between different AI nodes in an AI network.

Optionally, in embodiments of this application, the terminal device may send a measurement report to a connected network device, and the network device connected to the terminal device sends the measurement report to the first AI node. The measurement report includes candidate AI service information corresponding to one or more to-be-measured AI nodes. It is assumed that a network device corresponding to the first AI node is a first network device. If the network device connected to the terminal device is not the first network device, the network device connected to the terminal device may send the measurement report to the first network device in a forwarding manner, to send the measurement report to the first AI node.

Alternatively, the terminal device may send, to the to-be-measured AI node through the connected network device, a measurement report corresponding to the to-be-measured AI node, so that the to-be-measured AI node sends the respective measurement report to the first AI node. The measurement report corresponding to the to-be-measured AI node includes candidate AI service information corresponding to the to-be-measured AI node, and does not include candidate AI service information corresponding to another to-be-measured AI node. It is assumed that a to-be-measured node in the to-be-measured AI node is a second AI node, and a network device corresponding to the second AI node is a second network device, the terminal device may send, to the network device connected to the terminal device, a measurement report including candidate AI service information corresponding to the second AI node, so that the network device connected to the terminal device sends, to the second network device, the measurement report corresponding to the second AI node. The network device connected to the terminal device may send the measurement report to the second network device in a forwarding manner.

Optionally, in a manner in which the terminal device sends, to the to-be-measured AI node through the connected network device, the measurement report corresponding to the to-be-measured AI node, so that the to-be-measured AI node sends the respective measurement report to the first AI node, the measurement report sent by the terminal device further includes identification information of the first AI node, and a network device (for example, the second network device) corresponding to the to-be-measured AI node may send the measurement report to the first AI node based on the identification information of the first AI node.

Optionally, in a manner in which the terminal device sends, to the to-be-measured AI node through the connected network device, the measurement report corresponding to the to-be-measured AI node, so that the to-be-measured AI node sends the respective measurement report to the first AI node, forwarding of the measurement report may be completed by an interface between network devices on which AI nodes are independently deployed, or may be implemented by an interface between network devices (for example, RAN devices) that are connected to each other and that may provide a network access function for the terminal device.

The foregoing describes the technical solution of S301 and S302. Optionally, after S302, the first AI node may determine target AI service information based on the candidate AI service information, to update a local AI service list of the first AI node. The following describes in detail how the first AI node updates the local AI service list based on the candidate AI service information.

In a possible implementation, the first Al node may determine, from one or more pieces of candidate AI service information corresponding to AI services of a same type, candidate AI service information with optimal AI service performance as the target AI service information, and add the target AI service information to the local AI service list. The type of the AI service may be determined by using AI service identification information included in the candidate AI service information, and types of AI services corresponding to same AI service identification information are the same. Performance of the AI service may be determined by using performance information included in the candidate AI service information.

In other words, the first AI node may separately add, to the local AI service list based on the AI service identification information and the performance information included in the candidate AI service information, target AI service information in candidate AI service information corresponding to each of the one or more AI services corresponding to the candidate AI service information, where the target AI service information is candidate AI service information with optimal AI service performance in the candidate AI service information corresponding to each of the one or more AI services.

Optionally, when determining the candidate AI service information with the optimal performance based on the performance information in the candidate AI service information, the first AI node may determine the candidate AI service information with the optimal performance according to a preset rule. For example, the preset rule may be that if the performance information is represented by a value, candidate AI service information with a largest value of the performance information is candidate AI service information with optimal performance.

Optionally, in this implementation, the first AI node may periodically determine target AI service information. For example, every 10 minutes, the first AI node determines target AI service information from all candidate AI service information received within the 10 minutes. Alternatively, the first AI node may determine target AI service information when a quantity of pieces of received candidate AI service information meets a preset threshold. For example, every time the first AI node receives 10 pieces of candidate AI service information, the first AI node may determine target AI service information from the 10 pieces of candidate AI service information.

In another possible implementation, the first AI node may determine, as the target AI service information, candidate AI service information that is in the candidate AI service information and that is different from AI service information recorded in the local AI service list, and add the target AI service information to the local AI service list. In other words, if the first AI node determines that the candidate AI service information has already been recorded in the local AI service list, the first AI node ends a procedure, and does not perform a subsequent step. If the first AI node determines that the candidate AI service information has not been recorded in the local AI service list, the first AI node adds or updates the candidate AI service information to the local AI service list.

In this implementation, the candidate AI service information different from the AI service information recorded in the local AI service list is candidate AI service information whose type is different from that of the AI service information recorded in the local AI service list. Optionally, the type of the AI service information may be represented by AI service identification information. The first AI node may determine, based on the AI service identification information included in the AI service information, whether a type of the candidate AI service information is different from a type of the AI service information recorded in the local AI service list. In this way, it is determined whether to add the candidate AI service information to the local AI service list.

Optionally, in embodiments of this application, the two implementations of updating the local AI service list based on the candidate AI service information may be independently applied, or may be applied in combination. It may be understood that when the two implementations are applied in combination, an AI service corresponding to the AI service information retained in the local AI service list is an AI service with optimal performance in AI services of a same type.

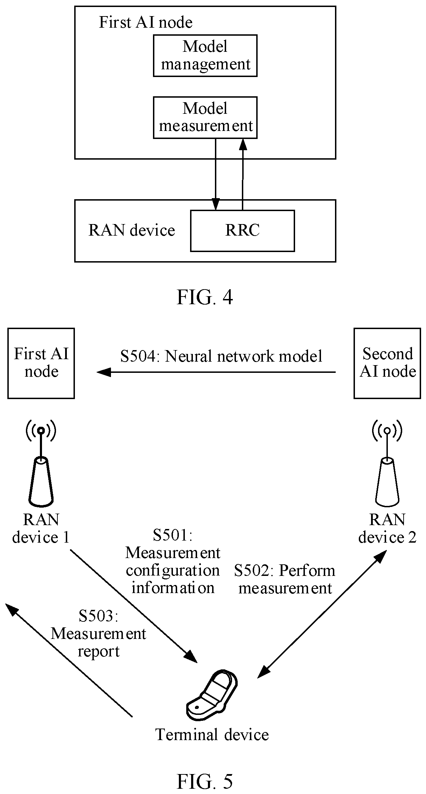

For example, it is assumed that the first AI node may be independently deployed on a network device dedicated to implementing a function of the AI node, the network device on which the first AI node is deployed corresponds to a RAN device, and the RAN device may communicate with the terminal device. A possible diagram in which the first AI node indicates, by using the RAN device, the terminal device to measure the to-be-measured AI node, and updates the local AI service list based on the measurement report reported by the terminal device may be shown in FIG. 4. As shown in FIG. 4, the network device on which the first Al node is deployed has two modules: a model management module and a model measurement module, and maintains a local AI service list. The model measurement module delivers the measurement configuration information to the terminal device by using radio resource control (radio resource control, RRC) of the RAN device, to indicate the terminal device to measure the to-be-measured AI node, and receives a measurement result (candidate AI service information) reported by the terminal device. The model management module can update the local AI service list based on the measurement result collected by the model measurement module. For specific implementation of indicating, by the model measurement module, the terminal device to measure the to-be-measured AI node and receiving the measurement result reported by the terminal device, refer to the foregoing descriptions of S301. For specific implementation of updating the local AI service list by the model management module, refer to the foregoing descriptions of updating the local AI service list by the first AI node based on the candidate AI service information.

Further, in embodiments of this application, after updating the local AI service list based on the candidate AI service information, the first AI node may further obtain a neural network model from a corresponding AI node based on one or more pieces of AI service information recorded in the local AI service list, to implement the AI service.

Specifically, the candidate AI service information includes AI node identification information. It may be understood that, therefore, the AI service information recorded in the local AI service list also includes the AI node identification information, and the first AI node may determine, based on AI node identification information included in one or more pieces of AI service information in the local AI service list, an AI node (referred to as a target AI node for short below) corresponding to the one or more pieces of AI service information, and obtain a neural network model from the target AI node.

Optionally, in embodiments of this application, the first AI node may periodically obtain the corresponding neural network model from the corresponding target AI node. For example, every 10 minutes, the first AI node determines a target AI node based on AI service information added to the local AI service list within the 10 minutes, and obtains a corresponding neural network model from the target AI node. Alternatively, the first AI node may obtain a corresponding neural network model from a corresponding target AI node when a quantity of pieces of AI service information newly added to the local AI service list meets a preset threshold. For example, every time 10 pieces of AI service information are added to the local AI service list, the first AI node determines a target AI node based on the 10 pieces of newly added AI service information, and obtains a neural network model from the target AI node.

Optionally, in embodiments of this application, the first AI node may obtain the neural network model from the target AI node in the following two different implementations.

In a possible implementation, the candidate AI service information includes model identification information. It may be understood that, therefore, the AI service information recorded in the local AI service list also includes the model identification information. After determining a target AI node corresponding to the AI service information in the local AI service list, the first AI node may obtain, from the target AI node based on the model identification information included in the AI service information in the local AI service list, a neural network model corresponding to the model identification information.

In another possible implementation, the first AI node may obtain, from the target AI node, a neural network model preconfigured by the target AI node. In this implementation, one or more neural network models may be preconfigured on the target AI node.

Optionally, in embodiments of this application, the first AI node may request the neural network model from the target AI node by sending a request message to the target AI node, and the target AI node may send the neural network model to the first AI node by sending a response message to the first AI node.

With reference to two examples and corresponding accompanying drawings, the following describes a solution that is provided in embodiments of this application and in which the first AI node sends the measurement configuration information to the terminal device, receives the measurement report from the terminal device, and obtains the neural network model from the target AI node based on the measurement report.

Example 1: It is assumed that a to-be-measured AI node in the to-be-measured AI node is a second AI node, the AI node is independently deployed on a network device dedicated to implementing a function of the AI node, the first AI node corresponds to a RAN device 1, the second AI node corresponds to a RAN device 2, and the first AI node and the second AI node may communicate with each other through separately deployed network devices. As shown in FIG. 5, a possible solution in which the first AI node obtains a neural network model from the second AI node includes S501 to S504.

S501: The first AI node sends measurement configuration information to the terminal device through the RAN device 1. For specific implementation of S501, refer to the foregoing descriptions of S301.

S502: The terminal device measures the second AI node by using the RAN device 2, and obtains a measurement result (AI service information corresponding to the second AI node). For specific implementation of S502, refer to the foregoing descriptions of S301.

S503: The terminal device determines that the AI service information corresponding to the second AI node meets a first condition, adds the AI service information corresponding to the second AI node to a measurement report, and sends the measurement report to the first AI node through the RAN device 1. For specific implementation of S503, refer to the foregoing descriptions of S302.

S504: The terminal device adds the AI service information corresponding to the second AI node to a local AI service list, and obtains a corresponding neural network model from the second AI node. For specific implementation of S504, refer to the foregoing descriptions of obtaining the neural network model from the target AI node by the first AI node.

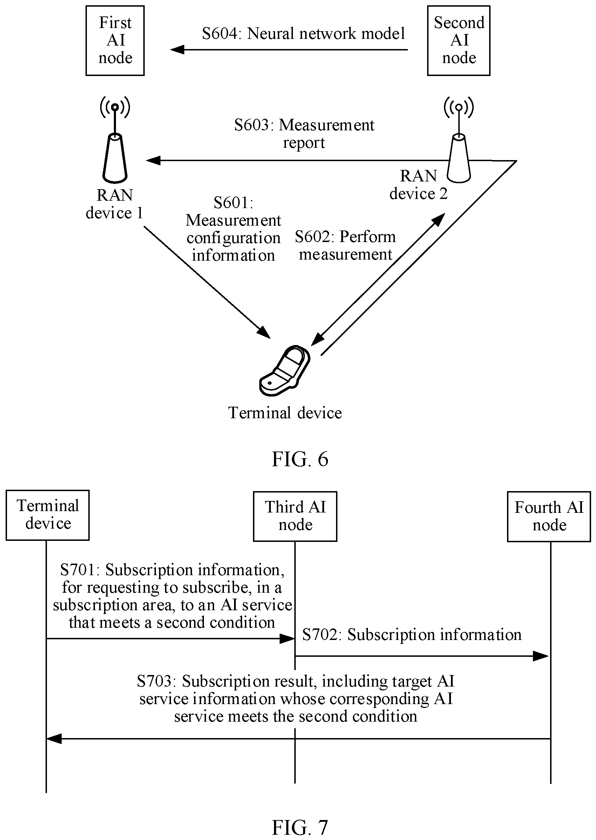

Example 2: It is assumed that a to-be-measured AI node in the to-be-measured AI node is a second AI node, the AI node is independently deployed on a network device dedicated to implementing a function of the AI node, the first AI node corresponds to a RAN device 1, the second AI node corresponds to a RAN device 2, and the first AI node and the second AI node may communicate with each other through separately deployed network devices. As shown in FIG. 6, a possible solution in which the first AI node obtains a neural network model from the second AI node includes S601 to S604.

S601: The first AI node sends measurement configuration information to the terminal device through the RAN device 1. For specific implementation of S601, refer to the foregoing descriptions of S301.

S602: The terminal device measures the second AI node, to obtain a measurement result (AI service information corresponding to the second AI node). For specific implementation of S602, refer to the foregoing descriptions of S301.

S603: The terminal device determines that the AI service information corresponding to the second AI node meets a first condition, adds the AI service information corresponding to the second AI node to a measurement report, and sends the measurement report to the first AI node through the RAN device 2. For specific implementation of S603, refer to the foregoing descriptions of S302.

S604: The first AI node adds the AI service information corresponding to the second AI node to a local AI service list, and obtains a corresponding neural network model from the second AI node. For specific implementation of S604, refer to the foregoing descriptions of obtaining the neural network model from the target AI node by the first AI node.

With reference to FIG. 1a to FIG. 2, the following describes in detail another AI service information obtaining method provided in embodiments of this application by using an example in which the third AI node 20 shown in FIG. 1a or FIG. 1b interacts with any terminal device 30. As shown in FIG. 7, the AI service information obtaining method includes S701 to S703.

S701: The terminal device sends subscription information to the third AI node, and correspondingly, the third AI node receives the subscription information from the terminal device. The subscription information is used to request to subscribe, in a subscription area, to an AI service that meets a second condition.

S702: The third AI node sends the subscription information to one or more fourth AI nodes in the subscription area.

S703: The one or more fourth AI nodes in the subscription area send a subscription result to the terminal device, and correspondingly, the terminal device receives the subscription result from the one or more fourth AI nodes. The subscription result includes target AI service information, and an AI service corresponding to the target AI service information meets the second condition.

For S701, the terminal device requests, by sending the subscription information to the third AI node, to subscribe to the AI service that the terminal device expects to obtain, that is, requests to subscribe to the AI service that meets the second condition. In embodiments of this application, the subscription information includes at least one of the following information:
AI service identification information, user identification information, service level information, subscription area information, model identification information, model parameter information, and subscription validity period information.

The following separately describes information that may be included in the subscription information.

The AI service identification information in the subscription information identifies the AI service that the terminal device requests to subscribe to. In other words, the terminal device may indicate, by using the AI service identification information in the subscription information, a type of the AI service expected to be obtained. Optionally, in embodiments of this application, the AI service that the terminal device requests to subscribe to may be determined by the terminal device based on an actual need or a service scenario. Optionally, based on the AI service that the terminal device requests to subscribe to, the subscription information may include one or more pieces of AI service identification information. For example, the identification information of the AI service may be an ID of the AI service, that is, an AI service ID (AI service ID).

The user identification information in the subscription information identifies the terminal device that sends the subscription information, and the user identification information may also be referred to as a subscription initiator identifier. Optionally, in embodiments of this application, the user identification information may reuse existing information used to identify the terminal device. For example, the user identification information may be a temporary mobile subscriber identity (temporary mobile subscriber identity, TMSI). Alternatively, the user identification information may be newly defined identification information used to identify the terminal device in an AI network.

The service level information in the subscription information represents the second condition, in other words, represents a condition that needs to be met by the AI service that the terminal device expects to obtain. Optionally, based on an actual requirement, the subscription information may include one or more pieces of service level information. For example, the service level information may be a threshold that needs to be met by performance of the AI service requested to be subscribed to. If performance of an AI service of the fourth AI node meets the threshold, the fourth AI node may feed back a subscription result corresponding to the subscription information to the terminal device. If performance of an AI service of the fourth AI node does not meet the threshold, the fourth AI node does not feed back a subscription result.

Optionally, in embodiments of this application, different AI services may correspond to different second conditions. In other words, in the subscription information, the service level information may correspond to the AI service identification information. For example, service level information corresponding to an AI service whose AI service ID is 1 may be that performance is greater than a first threshold, and service level information corresponding to an AI service whose AI service ID is 2 may be that performance is greater than a second threshold. Alternatively, different AI services may correspond to a same second condition, and the subscription information may include only same service level information. This is not specifically limited in embodiments of this application.

The subscription area information in the subscription information represents a subscription area. Optionally, in embodiments of this application, the subscription area information may include identification information of a subscribed AI node, and the third AI node sends the subscription information to the corresponding AI node based on the identification information of the AI node in the subscription information. It may be understood that each AI node corresponding to identification information of each AI node in the subscription information may also be referred to as each AI node in the subscription area. Alternatively, the subscription information may include identification information of a preplanned subscription area, and the third AI node sends, based on the identification information of the subscription area, the subscription information to all AI nodes in the corresponding subscription area.

Optionally, in embodiments of this application, the subscription area information may be determined by the terminal device or the third AI node based on an actual need or a service scenario. If the terminal device determines the subscription area information, the terminal device may send subscription information including the subscription area information to the third AI node, and the third AI node sends the received subscription information to an AI node in the subscription area. If the third AI node determines the subscription area information, after receiving, from the terminal device, subscription information that does not include subscription area information, the third AI node determines the subscription area information, adds the subscription area information to the subscription information, and then sends the subscription information including the subscription area information to an AI node in the subscription area.

The model identification information in the subscription information identifies a neural network model corresponding to the AI service that the subscription information is used to request to subscribe to. The terminal device may indicate, by using the model identification information, a type of the neural network model used to implement the AI service that the terminal device requests to subscribe to.

Optionally, in embodiments of this application, the AI service identification information in the subscription information may correspond to the model identification information, and identification information of a same AI service may correspond to one or more pieces of model identification information.

The model parameter information in the subscription information is parameter information of the neural network model corresponding to the AI service that the subscription information is used to request to subscribe to, and indicates the parameter information of the neural network model expected by the terminal device. In embodiments of this application, the model parameter information in the subscription information may include one or more of the following parameter information: a size, an input format, an output format, or the like of the neural network model. This is not specifically limited in embodiments of this application. For example, it is assumed that the terminal device requests to subscribe to an AI service, and the terminal device expects that a neural network model used to implement the AI service has 100 neurons. In this case, size information included in model parameter information in the subscription information may be 100.

Optionally, in embodiments of this application, the model identification information in the subscription information may correspond to the model parameter information. It may be understood that for different neural network models, parameter information expected by the terminal device may also be different. For example, it is assumed that the model parameter information includes size information, and the terminal device expects that a neural network model 1 used to implement an AI service has 100 neurons, and expects that a neural network model 2 used to implement the AI service has 200 neurons. In this case, in the subscription information, size information corresponding to model identification information 1 may be 100, and size information corresponding to model identification information 2 may be 200. Alternatively, different neural network models (model identification information) may correspond to same model parameter information. This is not specifically limited in embodiments of this application.

The subscription validity period information in the subscription information represents valid time of the subscription information. The subscription information is valid within the valid time, and becomes invalid when the valid time expires. Optionally, the subscription validity period information may be represented by time, for example, time 0 (time0, T0) to time 1 (time1, T1), or may be represented by duration, for example, 5 minutes.

Optionally, in embodiments of this application, the subscription information may be identified by first identification information. The first identification information may be newly defined identification information dedicated to identifying the subscription information. For example, a possible form of the first identification information may be a subscription identity (subscribe-ID, S-ID).

Optionally, in embodiments of this application, the first identification information may be generated by the third AI node. In this implementation, after receiving the subscription information from the terminal device, the third AI node may generate the first identification information, add the first identification information to a response message, and send the response message to the terminal device, where the response message is used to respond to the subscription information sent by the terminal device. Alternatively, the first identification information may be generated by the terminal device. In this implementation, the terminal device sends, to the third AI node, the subscription information identified by the first identification information.

For S702, after obtaining the subscription information, the third AI node separately sends the subscription information to each AI node in the subscription area. The AI node that receives the subscription information may determine, based on the subscription information, whether the AI node can provide the AI service requested by the terminal device. If the AI node can provide the AI service requested by the terminal device, the AI node monitors whether the corresponding AI service provided by the AI node meets the second condition. In embodiments of this application, an AI node that can provide the AI service that meets the second condition and that is requested to be subscribed to is referred to as a fourth AI node. In other words, the third AI node may send the subscription information to one or more fourth AI nodes in the subscription area.

Optionally, in embodiments of this application, the third AI node may be an AI node in the subscription area. In this case, the third AI node may also monitor, based on the subscription information, whether the third AI node can provide a corresponding AI service that meets the second condition. It may be understood that, if the third AI node can provide the corresponding AI service that meets the second condition, the third node is also a fourth AI node. Alternatively, the third AI node may not be an AI node in the subscription area. In this case, the third AI node does not need to monitor whether the third AI node can provide the corresponding AI service that meets the second condition.

For S703, after determining that the AI service provided by the fourth AI node in the subscription area can meet the second condition, the fourth AI node adds, to a subscription result, AI service information corresponding to the AI service that meets the second condition, and sends the subscription result to the terminal device, so that the terminal device obtains the AI service information corresponding to the expected AI service. The AI service information corresponding to the AI service that meets the second condition may also be referred to as target AI service information.

Based on the AI service information obtaining method provided in embodiments of this application, the terminal device may subscribe to an expected AI service from the AI node, and obtain AI service information corresponding to the AI service that meets a condition, so that the terminal device can subscribe, in the AI network, to the AI service that meets the condition.

Optionally, in embodiments of this application, for the AI service information corresponding to the AI service that meets the second condition, refer to the foregoing descriptions of the AI service information in S301.

Optionally, in embodiments of this application, the fourth AI node sends the subscription result to the terminal device in the following two manners.

Implementation 1: The fourth AI node sends the subscription result to the third AI node, and the third AI node sends the subscription result to the terminal device.

Implementation 2: The fourth AI node directly sends the subscription result to the terminal device. It should be noted that "directly" in this implementation means that the subscription result does not need to pass through the third AI node, and does not mean that the subscription result does not need to be forwarded by an intermediate device.

In embodiments of this application, a manner in which the third AI node or the fourth AI node sends the subscription result to the terminal device is related to a status of the terminal device. The following describes the manner in detail.

If the terminal device is in a connected state (active state), the third AI node or the fourth AI node may send the subscription result to the terminal device through a RAN device currently accessed by the terminal device. For example, the RAN device currently accessed by the terminal device may send the subscription result to the terminal device by using a UE-specific (UE-specific) parameter signal message. For specific implementation in which the third AI node or the fourth AI node sends the subscription result to the RAN device currently accessed by the terminal device, refer to the foregoing descriptions of the specific implementation in which the terminal device sends the measurement report to the first AI node.

If the terminal device is in an idle state (idle state) or an inactive state (inactive state), a manner in which the fourth AI node sends the subscription result to the terminal device is related to a solution of performing mobility management on the terminal device provided in embodiments of this application described below. Details are not described herein again.

Optionally, after S703, the AI service obtaining method provided in embodiments of this application may further include S704.a or S704.b.

S704.a: After obtaining, for the first time, the subscription result corresponding to the subscription information, the terminal device notifies a currently camped AI node that the terminal device has obtained the subscription result, and the currently camped AI node notifies another AI node in the subscription area that a subscription task can be terminated.

The AI node on which the terminal device currently camps is an AI node corresponding to a network device (for example, a RAN device) currently connected to the terminal device. The terminating the subscription task means that the AI node may stop monitoring whether the AI node can provide an AI service that meets a subscription information requirement (that meets the second condition).

S704.b: When sending the subscription result to the terminal device, the fourth AI node that is the first to determine, in terms of time, in the subscription area that the fourth AI node can provide the AI service required by the subscription information notifies another AI node in the subscription area that the subscription task can be terminated.

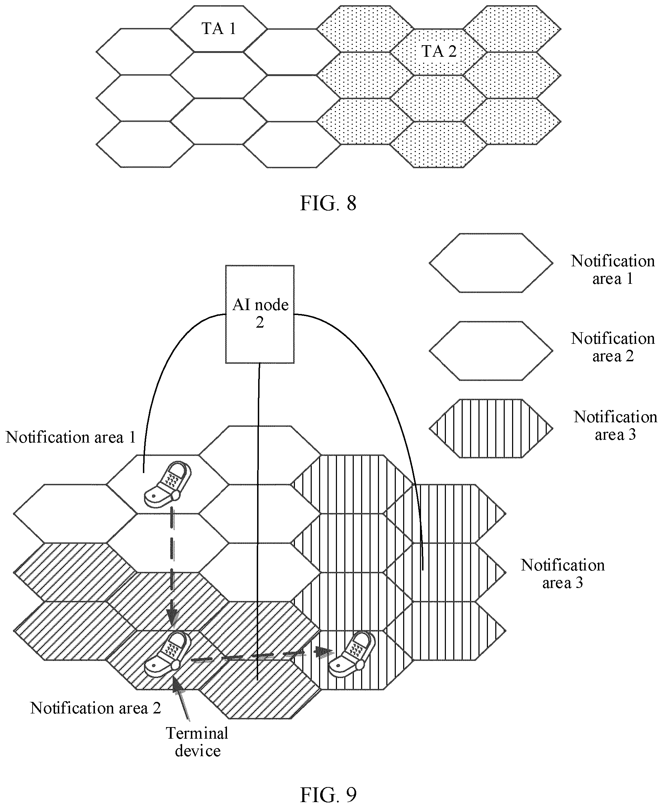

S701 to S703 are described above. The solution of S701 to S703 can enable the terminal device to subscribe, in the AI network, to the AI service that meets the requirement. However, the current AI network still has the following problem. Currently, a concept of a tracking area (tracking area, TA) is defined in a cellular system. As shown in FIG. 8, a plurality of cells are defined as one tracking area for mobility management on a radio access network side. When the terminal device keeps moving in one tracking area, the radio access network does not need to be notified that an inter-cell movement occurs. When the terminal device in the idle state is paged, paging is performed in all cells in the tracking area in which the terminal device is located. However, the radio access network is logically separated from the AI network. Currently, there is no mechanism to perform mobility management on the terminal device on an AI network side. Therefore, an embodiment of this application further provides a solution in which mobility management can be performed on the terminal device on the AI network side. The following describes the solution.

Optionally, in S702, after the third AI node obtains the subscription information, if the subscription information is identified by the first identification information, the AI service information obtaining method further includes S702.1 to S702.3.

S702.1: The third AI node determines that the terminal device is currently located in a first notification area, and associates the first identification information with second identification information, where the second identification information identifies the first notification area.

S702.2: The third AI node sends the second identification information associated with the first identification information to the one or more fourth AI nodes.

S702.3: The terminal device obtains the second identification information associated with the first identification information.

In S702.1, the third AI node may determine, based on location information of the terminal device, that the terminal device is currently located in the first notification area, to determine the second identification information identifying the first notification area, and establish an association relationship between the first identification information and the second identification information, to obtain the second identification information associated with the first identification information. In this embodiment of this application, a notification area (notification-area, N-Area) may be a newly defined concept used to track the terminal device in the AI network and perform mobility management. How to specifically perform the mobility management on the terminal device based on the notification area is described below in detail.

Optionally, in this embodiment of this application, the notification area (for example, the first notification area or a second notification area described below) is set or planned based on a cell and/or a beam. For example, the notification area may be planned by using a cell as a unit, and three neighboring cells form one notification area. For another example, the notification area may be planned by using a beam as a unit, and three beams form one notification area.

Optionally, in this embodiment of this application, the identification information identifying the notification area, for example, the second identification information identifying the first notification area, may alternatively be newly defined information. For example, a possible form of the identification information identifying the notification area may be a notification area identity (notification-area-ID, N-ID).

In S702.2, the third AI node sends the second identification information and the association relationship between the first identification information and the second identification information to each AI node in the subscription area. It may be understood that the one or more fourth AI nodes in the subscription area may receive the second identification information and the association relationship between the first identification information and the second identification information, and determine, based on the second identification information associated with the first identification information, that the terminal device is currently located in the first notification area.

In this embodiment of this application, the third AI node may simultaneously send, to the one or more fourth AI nodes, the subscription information identified by the first identification information, the second identification information, and the association relationship between the first identification information and the second identification information. Alternatively, the third AI node may first send the subscription information identified by the first identification information to the one or more fourth AI nodes, and then send the second identification information and the association relationship between the first identification information and the second identification information. This is not specifically limited in this embodiment of this application.

In S702.3, the terminal device may obtain, in the following manner, the second identification information associated with the first identification information.

Implementation 1: The third AI node sends, to the terminal device, the second identification information associated with the first identification information. Optionally, the third AI node may further send the association relationship between the first identification information and the second identification information to the terminal device. In this implementation, after determining that the terminal device is located in the first notification area, the third AI node may send the second identification information to a network device in the first notification area, to send the second identification information to the terminal device. Optionally, the third AI node may add the second identification information to a response message sent to the terminal device, where the response message is used to respond to the subscription information sent by the terminal device.

Implementation 2: The terminal device receives the second identification information sent by a network device in the first notification area. Optionally, in this embodiment of this application, the network device in the notification area, for example, a RAN device, may broadcast the identification information identifying the notification area, so that after moving to the notification area, the terminal device can receive the identification information identifying the notification area. Therefore, in this implementation, when the terminal device is located in the first notification area, the terminal device may receive the second identification information broadcast by the RAN device in the first notification area.

It should be noted that, that a time sequence of S702.3 is after S702.1 and S702.2 is not limited in this embodiment of this application. For example, if the terminal device receives the broadcast second identification information through the RAN device in the first notification area, the terminal device may obtain the second identification information after moving to the first notification area, regardless of when the third AI node associates the first identification information with the second identification information.

The following describes in detail how to perform mobility management on the terminal device in the AI network by using the notification area.

Further, after S702.1 to S702.3, if the terminal device moves to a second notification area different from the first notification area, the AI service information obtaining method further includes S702.4 and S702.5.

S702.4: The terminal device obtains third identification information, where the third identification information identifies the second notification area in which the terminal device is currently located.

Optionally, the terminal device may receive the third identification information from a third network device, where the third network device is located in the second notification area. For example, a RAN device in the second notification area broadcasts the third identification information identifying the second notification area. After moving to the second notification area, the terminal device may receive the third identification information broadcast by the RAN device.

S702.5: The terminal device determines that the third identification information is inconsistent with the second identification information, and sends an update request to the one or more fourth AI nodes, where the update request is used to request to associate the first identification information with the third identification information.

In S702.5, if the terminal device determines that the obtained third identification information is inconsistent with the previously obtained second identification information, it indicates that the terminal device has moved out of the first notification area in which the terminal device is previously located, and moved to the second notification area. Therefore, the terminal device needs to send the update request to each AI node (including the one or more fourth AI nodes) in the subscription area, to request to associate the first identification information with the third identification information.

After receiving the update request, the AI node in the subscription area updates, based on the update request, the association relationship between the first identification information and the second identification information to an association relationship between the first identification information and the third identification information. After the update, the first identification information is associated with the third identification information. Therefore, the AI node in the subscription area may learn, based on the third identification information associated with the first identification information, that the terminal device has moved to the second notification area.

For ease of understanding of how to perform the mobility management on the terminal device in the AI network by using the notification area, for example, as shown in FIG. 9, it is assumed that the terminal device sends subscription information whose S-ID is S1 to a third AI node (not shown in FIG. 9). Subscription areas corresponding to the subscription information whose S-ID is 1 includes a notification area 1, a notification area 2, and a notification area 3. N-IDs corresponding to the notification area 1, the notification area 2, and the notification area 3 are 001, 002, and 003 respectively. The notification area 1, the notification area 2, and the notification area 3 correspond to one AI node 2. After receiving the subscription information, the third AI node determines that the terminal device is currently located in the notification area 1 (a first notification area), associates S1 with the identification information 001 of the notification area 1, and forwards the associated information (including an association relationship) and the subscription information to the AI node 2. When the terminal device is located in the first notification area, the terminal device receives the N-ID 001 broadcast by a RAN device (not shown in FIG. 9) in the notification area 1. Then, the terminal device moves from the notification area 1 to the notification area 2. After moving to the notification area 2, the terminal device receives the N-ID 002 broadcast by a RAN device (not shown in FIG. 9) in the notification area 2. If the terminal device determines that 002 is inconsistent with 001, the terminal device sends an update request to the third AI node and the AI node 2, to request to associate S1 with 002. After receiving the update request, the third AI node and the AI node 2 update 001 associated with S1 to 002. After moving from the notification area 2 to the notification area 3 and determining, based on the N-ID 003 broadcast by a RAN device in the notification area 3, that 003 is inconsistent with 002, the terminal device sends an update request to the third AI node and the AI node 2 again, so that the third AI node and the AI node 2 update 002 associated with S1 to 003.

Optionally, when the subscription information is identified by first identification information, and the first identification information is associated with identification information (for example, second identification information or third identification information) identifying a notification area, the fourth AI node may use the identification information that is associated with the first identification information and that identifies the notification area, to determine the notification area in which the terminal device is currently located, to send a subscription result to the terminal device.

For example, if the terminal device is in an idle state or an inactive state, the fourth AI node may determine, based on the identification information that is associated with the first identification information and that identifies the notification area, the notification area in which the terminal device is currently located, to indicate all RAN devices in the notification area in which the terminal device is currently located to page, based on user identification information or the first identification information, the terminal device in a paging (paging) manner, so that the terminal device re-establishes an air interface link to a RAN device in the notification area in which the terminal device is currently located, and the fourth AI node can send the subscription result to the terminal device through the RAN device that establishes the air interface link to the terminal device.

For example, if the terminal device is in a connected state, the fourth AI node may determine, based on the identification information that is associated with the first identification information and that identifies the notification area, the notification area in which the terminal device is currently located, so that the fourth AI node can more quickly send the subscription result to the RAN device currently accessed by the terminal device.

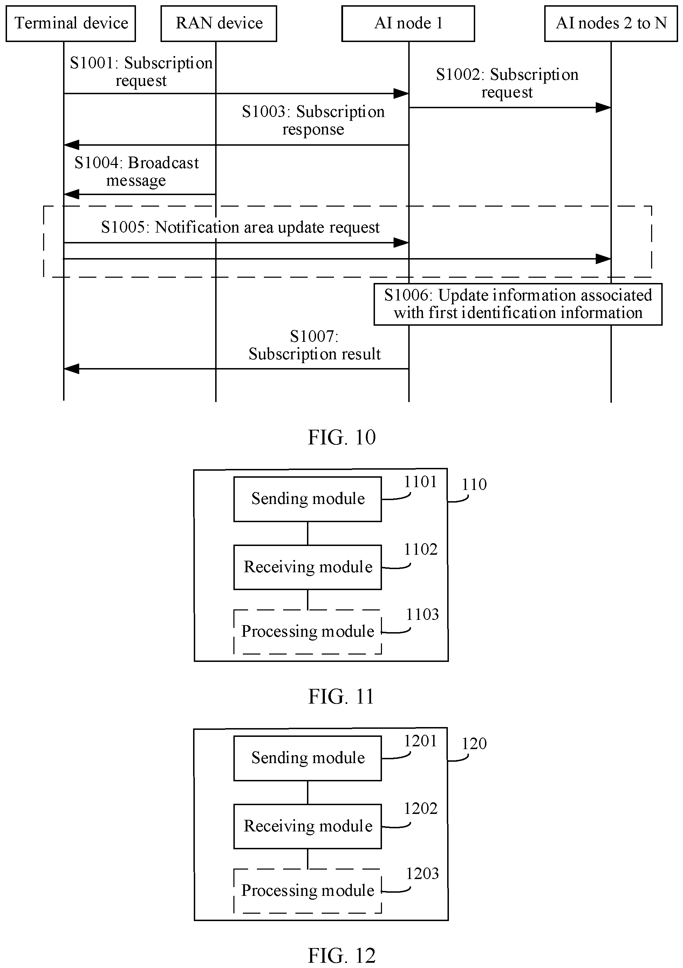

An example of an AI service information obtaining method provided in embodiments of this application is described below with reference to an example and the accompanying drawing. As shown in FIG. 10, the method includes S1001 to S1007.

S1001: A terminal device sends subscription information to an AI node 1 (a third AI node) through a connected RAN device, where the subscription information may also be referred to as a subscription request (subscribe request).

In S1001, the subscription information is used to request to subscribe, from an AI node 2 to an AI node N, to an AI service 1 that meets a second condition, where N is a positive integer greater than or equal to 2. For specific implementation of S1001, refer to the foregoing descriptions of S701.

S1002: The AI node 1 forwards the subscription information to the AI node 2 to the AI node N.

The AI node 1 allocates an S-ID S1 (first identification information) to the subscription information, and associates, based on an N-ID 001 (second identification information) of a notification area 1 in which the terminal device is currently located, S1 with 001. The AI node 1 sends the information 001, an association relationship between S1 and 001, and the subscription information identified by S1 to the AI node 2 to the AI node N. After receiving the subscription information, the AI node 2 to the AI node N monitor whether an AI service provided by the AI node 2 to the AI node N meets the second condition.

S1003: The AI node 1 sends a response message of the subscription information to the terminal device. The response message may also be referred to as a subscription response (subscribe response).

In S1003, the AI node 1 adds the 001 information associated with S1 to the response message, and sends the response message to the terminal device.

S1004: The terminal device receives a message broadcast (broadcast) by the connected RAN device.

In S1004, the terminal device moves from the notification area 1 to a notification area 2, and is connected to a RAN device in the notification area 2. The RAN device in the notification area 2 broadcasts an N-ID 002 (third identification information) of the notification area 2. After connecting to the RAN device in the notification area 2, the terminal device receives 002 broadcast by the RAN device.

S1005: The terminal device sends an update request to the AI node 1 and the AI node 2 to the AI node N, where the update request may also be referred to as a notification area update (N-Area update) request.

In S1005, if determining that 002 is inconsistent with 001 currently associated with S1, the terminal device sends the update request to the AI node 1 and the AI node 2 to the AI node N, to request to associate S1 with 002.

S1006: The AI node 1 and the AI node 2 to the AI node N update the information associated with S1, and one or more AI nodes of the AI node 2 to the AI node N determine that an AI service provided by the AI node can meet the second condition.

In S1006, the AI node 1 and the AI node 2 to the AI node N update 001 associated with S1 to 002. In addition, in this period, one or more AI nodes of the AI node 2 to the AI node N determine that the AI service provided by the AI node can meet the second condition, that is, there are one or more fourth AI nodes in the AI node 2 to the AI node N.

For specific implementation of S1002 to S1006, refer to the foregoing descriptions of S702 and S702.1 to S702.5.

S1007: The one or more fourth AI nodes in the AI node 2 to the AI node N send a subscription result to the terminal device.

The one or more fourth AI nodes in the AI node 2 to the AI node N determine, based on 002 associated with S1, that the terminal device is currently located in the notification area 2, and send the subscription result to the RAN device in the notification area 2, to send the subscription result to the terminal device through the RAN device in the notification area 002. For specific implementation of S1007, refer to the foregoing descriptions of S703.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments, the methods and/or steps implemented by the first AI node/third AI node may alternatively be implemented by a network device corresponding to the first AI node/third AI node, or by a component (for example, a chip or a circuit) that can be used in the network device corresponding to the first AI node/third AI node. The methods and/or steps implemented by the terminal device may alternatively be implemented by a component that can be used in the terminal device.

The solutions provided in embodiments of this application are mainly described above from a perspective of interaction between apparatuses. Correspondingly, an embodiment of this application further provides a communication apparatus, and the communication apparatus is configured to implement the foregoing methods. The communication apparatus may be the first AI node/third AI node in the foregoing method embodiments, or a network device corresponding to the first AI node/third AI node in the foregoing method embodiments, or an apparatus including the network device corresponding to the first AI node/third AI node, or a component that can be used in the network device corresponding to the first AI node/third AI node. Alternatively, the communication apparatus may be the terminal device in the foregoing method embodiments, or an apparatus including the terminal device, or a component that can be used in the terminal device. It may be understood that, to implement the foregoing functions, the communication apparatus includes a hardware structure and/or a software module for performing a corresponding function. A person skilled in the art should be easily aware that, in combination with units, algorithms, and steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use a different method to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely a logical function division. During actual implementation, another division manner may be used.

For example, the communication apparatus is the first AI node/third AI node in the foregoing method embodiments. FIG. 11 is a diagram of a structure of a communication apparatus 110. The communication apparatus 110 includes a sending module 1101 and a receiving module 1102. The sending module 1101 and the receiving module 1102 may also be referred to as a transceiver module. The sending module 1101 and the receiving module 1102 may also be referred to as a transceiver unit. The transceiver unit is configured to implement a sending and/or receiving function, for example, may be a transceiver circuit, a transceiver machine, a transceiver, or a communication interface.

The sending module 1101 may be configured to perform a sending-type step performed by the first AI node/third AI node in the foregoing method embodiments, and the receiving module 1102 may be configured to perform a receiving-type step performed by the first AI node/third AI node in the foregoing method embodiments.

For example, the sending module 1101 is configured to send measurement configuration information to a terminal device, where the measurement configuration information indicates to measure an AI service of a to-be-measured AI node. The receiving module 1102 is configured to receive a measurement report from the terminal device, where the measurement report includes candidate AI service information, the candidate AI service information is AI service information that meets a first condition and that is in one or more pieces of AI service information obtained by measuring the to-be-measured AI node based on the measurement configuration information, and the first condition is carried in the measurement configuration information.

Optionally, the communication apparatus 110 may further include a processing module 1103. The processing module 1103 may be configured to perform steps other than steps that are of receiving and sending types and that are performed by the first AI node/third AI node in the foregoing method embodiments.

All related content of the steps in the foregoing method embodiments may be cited in function descriptions of the corresponding functional modules. Details are not described herein again.

In this embodiment, the communication apparatus 110 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions. In a simple embodiment, a person skilled in the art may figure out that the communication apparatus 110 may be in a form of the communication apparatus 200 shown in FIG. 2.

For example, the processor 201 in the communication apparatus 200 shown in FIG. 2 may invoke computer-executable instructions stored in the memory 203, so that the communication apparatus 200 performs the AI service information obtaining method in the foregoing method embodiments.

Specifically, functions/implementation processes of the sending module 1101, the receiving module 1102, and the processing module 1103 in FIG. 11 may be implemented by the processor 201 in the communication apparatus 200 shown in FIG. 2 by invoking the computer-executable instructions stored in the memory 203. Alternatively, a function/implementation process of the processing module 1103 in FIG. 11 may be implemented by the processor 201 in the communication apparatus 200 shown in FIG. 2 by invoking the computer-executable instructions stored in the memory 203, and functions/implementation processes of the sending module 1101 and the receiving module 1102 in FIG. 11 may be implemented by using the communication interface 204 in the communication apparatus 200 shown in FIG. 2.

The communication apparatus 110 provided in this embodiment may perform the foregoing AI service information obtaining methods. Therefore, for technical effects that can be achieved by the communication apparatus 110, refer to the foregoing method embodiments. Details are not described herein again.

Alternatively, for example, the communication apparatus is the terminal device in the foregoing method embodiments. FIG. 12 is a diagram of a structure of a communication apparatus 120. The communication apparatus 120 includes a sending module 1201 and a receiving module 1202. The sending module 1201 and the receiving module 1202 may also be collectively referred to as a transceiver module. The sending module 1201 and the receiving module 1202 may also be referred to as a transceiver unit. The transceiver unit is configured to implement a sending and/or receiving function, for example, may be a transceiver circuit, a transceiver machine, a transceiver, or a communication interface.

The sending module 1201 may be configured to perform a sending-type step performed by the terminal device in the foregoing method embodiments, and the receiving module 1202 may be configured to perform a receiving-type step performed by the terminal device in the foregoing method embodiments.

For example, the receiving module 1202 is configured to receive measurement configuration information from a first AI node, where the measurement configuration information indicates to measure an AI service of a to-be-measured AI node. The sending module 1201 is configured to send a measurement report to the first AI node, where the measurement report includes candidate AI service information, the candidate AI service information is AI service information that meets a first condition and that is in one or more pieces of AI service information obtained by measuring the to-be-measured AI node based on the measurement configuration information, and the first condition is carried in the measurement configuration information.

For another example, the sending module 1201 is configured to send subscription information to a third AI node, where the subscription information is used to request to subscribe, in a subscription area, to an AI service that meets a second condition. The receiving module 1202 is configured to receive a subscription result from one or more fourth AI nodes in the subscription area, where the subscription result includes target AI service information, and an AI service corresponding to the target AI service information meets the second condition.

Optionally, the communication apparatus 120 may further include a processing module 1203. The processing module 1203 may be configured to perform steps other than steps that are of receiving and sending types and that are performed by the terminal device in the foregoing method embodiments.

All related content of the steps in the foregoing method embodiments may be cited in function descriptions of the corresponding functional modules. Details are not described herein again.

In this embodiment, the communication apparatus 120 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions. In a simple embodiment, a person skilled in the art may figure out that the communication apparatus 120 may be in a form of the communication apparatus 200 shown in FIG. 2.

For example, the processor 201 in the communication apparatus 200 shown in FIG. 2 may invoke computer-executable instructions stored in the memory 203, so that the communication apparatus 200 performs the AI service information obtaining method in the foregoing method embodiments.

Specifically, functions/implementation processes of the sending module 1201, the receiving module 1202, and the processing module 1203 in FIG. 12 may be implemented by the processor 201 in the communication apparatus 200 shown in FIG. 2 by invoking the computer-executable instructions stored in the memory 203. Alternatively, a function/implementation process of the processing module 1203 in FIG. 12 may be implemented by the processor 201 in the communication apparatus 200 shown in FIG. 2 by invoking the computer-executable instructions stored in the memory 203, and functions/implementation processes of the sending module 1201 and the receiving module 1202 in FIG. 12 may be implemented by using the communication interface 204 in the communication apparatus 200 shown in FIG. 2.

The communication apparatus 120 provided in this embodiment may perform the foregoing AI service information obtaining methods. Therefore, for technical effects that can be achieved by the communication apparatus 120, refer to the foregoing method embodiments. Details are not described herein again.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include a memory. In another possible design, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor. When the communication apparatus is a chip system, the communication device may include a chip, or may include a chip and another discrete component. This is not specifically limited in this embodiment of this application.

Optionally, an embodiment of this application further provides a communication apparatus. The communication apparatus may include a processor and an interface circuit. The interface circuit is configured to communicate with another module outside the communication apparatus. The processor may be configured to execute a computer program or instructions, so that the communication apparatus implements the method in any one of the foregoing method embodiments. In some scenarios, the communication apparatus may be a chip or a chip system.

All or some of the foregoing embodiments may be implemented by using software, hardware, firmware, or any combination thereof. When a software program is used to implement embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to the embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plurality of objects. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and the accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, this application is intended to cover these modifications and variations of this application provided that they fall within the scope of protection of the claims of this application and their equivalent technologies.

## Claims

1. An artificial intelligence AI service information obtaining method, wherein the method comprises:
sending, by a first AI node, measurement configuration information to a terminal device, wherein the measurement configuration information indicates to measure an AI service of a to-be-measured AI node; and
receiving, by the first AI node, a measurement report from the terminal device, wherein the measurement report comprises candidate AI service information, the candidate AI service information is AI service information that meets a first condition and that is in one or more pieces of AI service information obtained by measuring the to-be-measured AI node based on the measurement configuration information, and the first condition is carried in the measurement configuration information.

2. The method according to claim 1, wherein the candidate AI service information comprises AI service identification information and performance information, the AI service identification information identifies an AI service corresponding to the candidate AI service information, the performance information represents performance of the AI service corresponding to the candidate AI service information, and the method further comprises:
separately adding, by the first AI node to a local AI service list based on the AI service identification information and the performance information, target AI service information in candidate AI service information corresponding to each of the one or more AI services corresponding to the candidate AI service information, wherein the target AI service information is candidate AI service information with optimal AI service performance in the candidate AI service information corresponding to each of the one or more AI services.

3. The method according to claim 1, wherein the method further comprises:
adding, by the first AI node, target AI service information in the candidate AI service information to a local AI service list, wherein the target AI service information is candidate AI service information that is in the candidate AI service information and that is different from AI service information recorded in the local AI service list.

4. The method according to claim 2 or 3, wherein the candidate AI service information comprises AI node identification information, the AI node identification information identifies the to-be-measured AI node corresponding to the candidate AI service information, and the method further comprises:
determining, by the first AI node based on AI node identification information comprised in one or more pieces of AI service information in the local AI service list, an AI node or AI nodes corresponding to the one or more pieces of AI service information; and
obtaining, by the first AI node, a neural network model or neural network models of the AI node or the AI nodes corresponding to the one or more pieces of AI service information, wherein the neural network model is used to implement an AI service.

5. The method according to claim 4, wherein the candidate AI service information comprises model identification information, the model identification information identifies a neural network model corresponding to the candidate AI service information, and the obtaining, by the first AI node, a neural network model or neural network models of the AI node or the AI nodes corresponding to the one or more pieces of AI service information comprises:
obtaining, by the first AI node from the AI node or the AI nodes corresponding to the one or more pieces of AI service information, the neural network model corresponding to the model identification information comprised in the one or more pieces of AI service information.

6. The method according to claim 4, wherein the obtaining, by the first AI node, a neural network model or neural network models of the AI node or the AI nodes corresponding to the one or more pieces of AI service information comprises:
obtaining, by the first AI node, the preconfigured neural network model from the AI node or the AI nodes corresponding to the one or more pieces of AI service information.

7. The method according to any one of claims 1 to 6, wherein the measurement configuration information comprises identification information of the to-be-measured AI node and identification information of the AI service that needs to be measured.

8. The method according to any one of claims 1 to 7, wherein the candidate AI service information comprises at least one of the following information:
the AI service identification information, the AI node identification information, the model identification information, model parameter information, the performance information, and time validity information, wherein the AI service identification information identifies the AI service corresponding to the candidate AI service information, the AI node identification information identifies the to-be-measured AI node corresponding to the candidate AI service information, the model identification information identifies the neural network model corresponding to the candidate AI service information, the model parameter information is parameter information of the neural network model corresponding to the candidate AI service information, the performance information represents performance of the AI service corresponding to the candidate AI service information, and the time validity information represents valid time of the candidate AI service information.

9. The method according to any one of claims 1 to 8, wherein the receiving, by the first AI node, a measurement report from the terminal device comprises:
receiving, by the first AI node, the measurement report from the terminal device through a second network device, wherein the second network device is a network device corresponding to a second AI node in the to-be-measured AI node, and the candidate AI service information is candidate AI service information corresponding to the second AI node.

10. The method according to claim 9, wherein the measurement report further comprises identification information of the first AI node, and the identification information of the first AI node is used by the second network device to send the measurement report to the first AI node.

11. An artificial intelligence AI service information obtaining method, wherein the method comprises:
receiving, by a third AI node, subscription information from a terminal device, wherein the subscription information is used to request to subscribe, in a subscription area, to an AI service that meets a second condition; and
sending, by the third AI node, the subscription information to one or more fourth AI nodes in the subscription area, to enable the fourth AI node to send, based on the subscription information, a subscription result to the terminal device, wherein the subscription result comprises target AI service information, and an AI service corresponding to the target AI service information meets the second condition.

12. The method according to claim 11, wherein the subscription information is identified by first identification information.

13. The method according to claim 12, wherein the first identification information is generated by the third AI node; or
the first identification information is generated by the terminal device.

14. The method according to claim 12 or 13, wherein after the receiving, by a third AI node, subscription information from a terminal device, the method further comprises:
determining, by the third AI node, that the terminal device is currently located in a first notification area, and associating the first identification information with second identification information, wherein the second identification information identifies the first notification area; and
sending, by the third AI node, the second identification information associated with the first identification information to the one or more fourth AI nodes.

15. The method according to claim 14, wherein the first notification area is set based on a cell and/or a beam.

16. The method according to any one of claims 11 to 15, wherein the subscription information comprises at least one of the following information:
AI service identification information identifying the AI service requested to be subscribed to, user identification information identifying the terminal device, service level information representing the second condition, subscription area information representing the subscription area, model identification information, model parameter information, and subscription validity period information, wherein the model identification information identifies a neural network model corresponding to the AI service to which the subscription information is used to request to subscribe, the model parameter information is parameter information of the neural network model corresponding to the AI service to which the subscription information is used to request to subscribe, and the subscription validity period information represents valid time of the subscription information.

17. The method according to claim 16, wherein the subscription area information is determined by the terminal device; or
the subscription area information is determined by the third AI node.

18. An artificial intelligence AI service information obtaining method, wherein the method comprises:
sending, by a terminal device, subscription information to a third AI node, wherein the subscription information is used to request to subscribe, in a subscription area, to an AI service that meets a second condition; and
receiving, by the terminal device, a subscription result from one or more fourth AI nodes in the subscription area, wherein the subscription result comprises target AI service information, and an AI service corresponding to the target AI service information meets the second condition.

19. The method according to claim 18, wherein the subscription information is identified by first identification information.

20. The method according to claim 19, wherein the first identification information is generated by the third AI node; or
the first identification information is generated by the terminal device.

21. The method according to claim 19 or 20, wherein after the sending, by a terminal device, subscription information to a third AI node, the method further comprises:
obtaining, by the terminal device, second identification information associated with the first identification information, wherein the second identification information identifies a first notification area in which the terminal device is currently located.

22. The method according to claim 21, wherein the method further comprises:
obtaining, by the terminal device, third identification information, wherein the third identification information identifies a second notification area in which the terminal device is currently located; and
determining, by the terminal device, that the third identification information is inconsistent with the second identification information, and sending an update request to the one or more fourth AI nodes, wherein the update request is used to request to associate the first identification information with the third identification information.

23. The method according to claim 22, wherein the obtaining, by the terminal device, third identification information comprises:
receiving, by the terminal device, the third identification information from a third network device, wherein the third network device is located in the second notification area.

24. The method according to any one of claims 21 to 23, wherein the first notification area is set based on a cell and/or a beam.

25. The method according to any one of claims 18 to 24, wherein the subscription information comprises at least one of the following information:
AI service identification information identifying the AI service requested to be subscribed to, user identification information identifying the terminal device, service level information representing the second condition, subscription area information representing the subscription area, model identification information, model parameter information, and subscription validity period information, wherein the model identification information identifies a neural network model corresponding to the AI service to which the subscription information is used to request to subscribe, the model parameter information is parameter information of the neural network model corresponding to the AI service to which the subscription information is used to request to subscribe, and the subscription validity period information represents valid time of the subscription information.

26. The method according to claim 25, wherein the subscription area information is determined by the terminal device; or
the subscription area information is determined by the third AI node.

27. An AI service information obtaining method, wherein the method comprises:
receiving, by a terminal device, measurement configuration information from a first AI node, wherein the measurement configuration information indicates to measure an AI service of a to-be-measured AI node; and
sending, by the terminal device, a measurement report to the first AI node, wherein the measurement report comprises candidate AI service information, the candidate AI service information is AI service information that meets a first condition and that is in one or more pieces of AI service information obtained by measuring the to-be-measured AI node based on the measurement configuration information, and the first condition is carried in the measurement configuration information.

28. The method according to claim 27, wherein the measurement configuration information comprises identification information of the to-be-measured AI node and identification information of the AI service that needs to be measured.

29. The method according to claim 27 or 28, wherein the candidate AI service information comprises at least one of the following information:
AI service identification information, AI node identification information, model identification information, model parameter information, performance information, and time validity information, wherein the AI service identification information identifies an AI service corresponding to the candidate AI service information, the AI node identification information identifies the to-be-measured AI node corresponding to the candidate AI service information, the model identification information identifies a neural network model corresponding to the candidate AI service information, the model parameter information is parameter information of the neural network model corresponding to the candidate AI service information, the performance information represents performance of the AI service corresponding to the candidate AI service information, and the time validity information represents valid time of the candidate AI service information.

30. The method according to any one of claims 27 to 29, wherein the sending, by the terminal device, a measurement report to the first AI node comprises:
sending, by the terminal device, the measurement report to the first AI node through a second network device, wherein the second network device is a network device corresponding to a second AI node in the to-be-measured AI node, and the candidate AI service information is candidate AI service information corresponding to the second AI node.

31. The method according to claim 30, wherein the measurement report further comprises identification information of the first AI node, and the identification information of the first AI node is used by the second network device to send the measurement report to the first AI node.

32. A communication apparatus, comprising a processor and a memory, wherein the memory is configured to store computer-executable instructions, and the processor is configured to execute the instructions stored in the memory; and when the instructions are run by the processor, the communication apparatus is enabled to perform the method according to any one of claims 1 to 10, or the communication apparatus is enabled to perform the method according to any one of claims 11 to 17, or the communication apparatus is enabled to implement the method according to any one of claims 18 to 26, or the communication apparatus is enabled to implement the method according to any one of claims 27 to 31.

33. A communication apparatus, wherein the communication apparatus comprises units configured to perform the steps according to any one of claims 1 to 10, or the communication apparatus comprises units configured to perform the steps according to any one of claims 11 to 17, or the communication apparatus comprises units configured to perform the steps according to any one of claims 18 to 26, or the communication apparatus comprises units configured to perform the steps according to any one of claims 27 to 31.

34. A communication apparatus, comprising a processor and an interface circuit, wherein the interface circuit is configured to communicate with a module outside the communication apparatus, and the processor is configured to run a computer program or instructions to perform the method according to any one of claims 1 to 10, or the processor is configured to run a computer program or instructions to perform the method according to any one of claims 11 to 17, or the processor is configured to run a computer program or instructions to perform the method according to any one of claims 18 to 26, or the processor is configured to run a computer program or instructions to perform the method according to any one of claims 27 to 31.

35. A communication apparatus, comprising a processor, wherein the processor is configured to: after being coupled to a memory and reading instructions in the memory, perform the method according to any one of claims 1 to 10 according to the instructions, or perform the method according to any one of claims 11 to 17, or perform the method according to any one of claims 18 to 26, or perform the method according to any one of claims 27 to 31.

36. A computer program product, wherein the computer program product comprises instructions, and when the computer program product runs on a communication apparatus, the communication apparatus is enabled to perform the method according to any one of claims 1 to 10, or the communication apparatus is enabled to perform the method according to any one of claims 11 to 17, or the communication apparatus is enabled to perform the method according to any one of claims 18 to 26, or the communication apparatus is enabled to perform the method according to any one of claims 27 to 31.

37. A computer-readable storage medium, wherein the computer-readable storage medium stores a computer program, and when the computer program is executed by a computer, the computer is enabled to perform the method according to any one of claims 1 to 10, or the computer is enabled to perform the method according to any one of claims 11 to 17, or the computer is enabled to perform the method according to any one of claims 18 to 26, or the computer is enabled to perform the method according to any one of claims 27 to 31.

38. A communication system, comprising a communication apparatus configured to perform the method according to any one of claims 11 to 17 and a communication apparatus configured to perform the method according to any one of claims 18 to 26.

39. A communication system, comprising a communication apparatus configured to perform the method according to any one of claims 1 to 10 and a communication apparatus configured to perform the method according to any one of claims 27 to 31.
